# FASCICULE DE BREVET EUROPEEN

(11) **EP 3 914 884 B1**
(45) Date de publication et mention de la délivrance du brevet: **27.08.2025**
(21) Numéro de dépôt: 20701066.1
(22) Date de dépôt: 23.01.2020
(51) Int. Cl.: G01K 17/20, G01J 1/00

(54) **PROCÉDÉ ET DISPOSITIF DE DÉTERMINATION D'AU MOINS UNE VALEUR D'ÉCHANGE ÉNERGÉTIQUE ET/OU LUMINEUX AU TRAVERS D'AU MOINS UN VITRAGE D'UN BÂTIMENT, PROCÉDÉ ET SYSTÈME DE COMMANDE D'AU MOINS UN DISPOSITIF DOMOTIQUE ASSURANT UN CONFORT THERMIQUE ET/OU LUMINEUX DANS UN BÂTIMENT**
VERFAHREN UND VORRICHTUNG ZUR BESTIMMUNG MINDESTENS EINES WERTES FÜR WÄRME- UND/ODER LICHTAUSTAUSCH DURCH MINDESTENS EINE GLASSCHEIBE EINES GEBÄUDES, VERFAHREN UND SYSTEM ZUR STEUERUNG MINDESTENS EINER HAUSAUTOMATISIERUNGSVORRICHTUNG ZUR BEREITSTELLUNG VON THERMISCHEM UND/ODER VON LICHTKOMFORT IN EINEM GEBÄUDE
METHOD AND DEVICE FOR DETERMINING AT LEAST ONE VALUE FOR HEAT AND/OR LIGHT EXCHANGE THROUGH AT LEAST ONE GLASS PANEL OF A BUILDING, METHOD AND SYSTEM FOR CONTROLLING AT LEAST ONE HOME AUTOMATION DEVICE PROVIDING THERMAL AND/OR LIGHT COMFORT IN A BUILDING

(30) Priorité: 24.01.2019 FR 1900630
(43) Date de publication de la demande: 01.12.2021
(73) Titulaire: Somfy Activites SA, 74300 Cluses (FR)
(72) Inventeur: GERINIERE, Pierre, 74300 CLUSES (FR); ROUSSEAU, Fabien, 74440 MIEUSSY (FR); CARAVEC, Pierre-Emmanuel, 74130 MONT SAXONNEX (FR)
(74) Mandataire: Novaimo
(86) Numéro de dépôt international: PCT/EP2020/051639
(87) Numéro de publication internationale: WO 2020/152274

(56) Documents cités:
- SUN YANYI ET AL: "Analysis of the daylight performance of a glazing system with Parallel Slat Transparent Insulation Material (PS-TIM)", ENERGY AND BUILDINGS, LAUSANNE, CH, vol. 139, 5 January 2017 (2017-01-05), pages 616 - 633, XP029932625, ISSN: 0378-7788, DOI: 10.1016/J.ENBUILD.2017.01.001
- GHOSH ARITRA ET AL: "Effect of sky conditions on light transmission through a suspended particle device switchable glazing", SOLAR ENERGY MATERIALS AND SOLAR CELLS, vol. 160, 2017, pages 134 - 140, XP029825819, ISSN: 0927-0248, DOI: 10.1016/J.SOLMAT.2016.09.049
- DAVID APPELFELD ET AL: "An hourly based performance comparison of an integrated micro-structural perforated shading screen with standard shading systems", ENERGY AND BUILDINGS, LAUSANNE, CH, vol. 50, 16 March 2012 (2012-03-16), pages 166 - 176, XP028513858, ISSN: 0378-7788, [retrieved on 20120324], DOI: 10.1016/J.ENBUILD.2012.03.038
- TZEMPELIKOS ATHANASIOS ET AL: "Estimating detailed optical properties of window shades from basic available data and modeling implications on daylighting and visual comfort", ENERGY AND BUILDINGS, LAUSANNE, CH, vol. 126, 17 May 2016 (2016-05-17), pages 396 - 407, XP029656492, ISSN: 0378-7788, DOI: 10.1016/J.ENBUILD.2016.05.038

## Description

La présente invention concerne le domaine des dispositifs domotiques pour bâtiment à usage résidentiel, commercial ou industriel. L'invention concerne plus particulièrement un procédé de détermination d'au moins une valeur d'échange énergétique et/ou lumineux au travers d'au moins un vitrage d'un bâtiment. L'invention concerne également un procédé de commande d'au moins un dispositif domotique assurant un confort thermique et/ou lumineux dans un bâtiment et utilisant un tel procédé de détermination d'au moins une valeur d'échange énergétique et/ou lumineux au travers d'au moins un vitrage d'un bâtiment. L'invention concerne plus encore un dispositif de détermination d'au moins une valeur d'échange énergétique et/ou lumineux et un système de commande mettant en œuvre respectivement le procédé de détermination et le procédé de commande. L'invention concerne encore un produit programme d'ordinateur ou un support d'enregistrement de données destinés à la mise en œuvre de ces procédés.

On sait que les ouvertures des bâtiments équipées chacune d'un vitrage permettent des apports thermiques conséquents lorsqu'elles sont exposées au rayonnement direct du soleil. Toutefois, il n'existe pas de solution permettant de quantifier de manière simple les apports lumineux au travers d'un vitrage.

SUN YANYl ET AL: "Analysis of the daylight performance of a glazing system with Parallel Slat Transparent Insulation Material (PS-TIM)", ENERGY AND BUILDINGS, LAUSANNE, CH, vol. 139, 5 janvier 2017 (2017-01-05), pages 616-633,

divulgue une analyse des performances en matière de lumière du jour d'un système de vitrage avec un matériau isolant transparent à lamelles parallèles. ¶

GHOSH ARITRA ET AL: "Effect of sky conditions on light transmission through a suspended particle device switchable glazing", SOLAR ENERGY MATERIALS AND SOLAR CELLS, vol. 160, 2017, pages 134-140, décrit un effet des conditions du ciel sur la transmission de la lumière à travers un vitrage commutable à particules suspendues.

DAVID APPELFELD ET AL: "An hourly based performance comparison of an integrated micro-structural perforated shading screen with standard shading systems", ENERGY AND BUILDINGS, LAUSANNE, CH, vol. 50, 16 mars 2012 (2012-03-16), pages 166-176, décrit une comparaison horaire des performances d'un écran d'ombrage perforé micro-structurel intégré avec des systèmes d'ombrage standard.

TZEMPELIKOS ATHANASIOS ET AL: "Estimating detailed optical properties of window shades from basic available data and modeling implications on daylighting and visual comfort", ENERGY AND BUILDINGS, LAUSANNE, CH, vol. 126, 17 mai 2016 (2016-05-17), pages 396-407, dilvugue l'estimation des propriétés optiques détaillées des stores de fenêtre à partir des données de base disponibles et la modélisation des implications sur l'éclairage naturel et le confort visuel.

Le but de l'invention est de fournir un procédé de détermination d'au moins une valeur d'échange énergétique et/ou lumineux au travers d'au moins un vitrage d'un bâtiment remédiant aux inconvénients ci-dessus, ainsi qu'un procédé de commande d'au moins un dispositif domotique assurant un confort thermique et/ou lumineux dans un bâtiment et utilisant un tel procédé de détermination d'au moins une valeur d'échange énergétique et/ou lumineux au travers d'au moins un vitrage d'un bâtiment, un dispositif de détermination d'au moins une valeur d'échange énergétique et/ou lumineux et un système de commande d'au moins un dispositif domotique. En particulier, l'invention permet de déterminer au moins une valeur d'échange énergétique et/ou lumineux au travers d'au moins un vitrage d'un bâtiment de manière simple, fiable et précise.

A cet égard, la présente invention vise, selon un premier aspect, un procédé de détermination d'au moins une valeur d'échange énergétique et/ou lumineux au travers d'au moins un vitrage d'un bâtiment, le bâtiment comprenant une pluralité d'ouvertures, chaque ouverture ou au moins une partie d'entre elles étant configurée pour être fermée respectivement par un vitrage, le bâtiment étant équipé d'une installation domotique, l'installation domotique comprenant au moins un terminal mobile et au moins un dispositif domotique, le dispositif domotique comprenant, pour chaque vitrage ou pour une partie d'entre eux, au moins un occultant et un dispositif d'entraînement motorisé, le dispositif d'entraînement motorisé mettant en mouvement un écran de l'occultant entre au moins une première position et au moins une deuxième position, le procédé de détermination étant mis en œuvre au moins en partie par le terminal mobile.

Selon l'invention, le procédé de détermination d'au moins une valeur d'échange énergétique et/ou lumineux au travers d'au moins un vitrage d'un bâtiment comprend au moins les étapes suivantes :
- obtention de premières caractéristiques du vitrage et/ou de deuxièmes caractéristiques d'au moins un occultant associé au vitrage,
- obtention de troisièmes caractéristiques de l'environnement du vitrage, par l'intermédiaire du terminal mobile,
- détermination automatique d'au moins une valeur d'échange énergétique et/ou lumineux au travers du vitrage à partir des troisièmes caractéristiques de l'environnement du vitrage obtenues précédemment, lors de la deuxième étape d'obtention, ainsi que des premières caractéristiques du vitrage et/ou des deuxièmes caractéristiques de l'occultant obtenues précédemment, lors de la première étape d'obtention, les étapes d'obtention et de détermination étant itérées sur plusieurs ouvertures du bâtiment équipées chacune d'un vitrage.

L'étape de détermination peut être mise en œuvre pour au moins une date déterminée, les deuxièmes caractéristiques de l'occultant peuvent comprendre des deuxièmes caractéristiques de l'occultant à la date déterminée et/ou les troisièmes caractéristiques de l'environnement du vitrage peuvent comprendre des troisièmes caractéristiques de l'environnement du vitrage à la date déterminée et le procédé peut comprendre, en outre, au moins une étape de détermination automatique d'au moins une valeur d'échange énergétique et/ou lumineux au travers du vitrage à la date déterminée à partir :
- de la valeur d'échange énergétique et/ou lumineux déterminée précédemment, lors de l'étape de détermination,
- des deuxièmes caractéristiques de l'occultant à la date déterminée et des troisièmes caractéristiques de l'environnement du vitrage à la date déterminée, et
- de la date déterminée.

Les troisièmes caractéristiques de l'environnement du vitrage à la date déterminée peuvent comprendre au moins une température interne au bâtiment à la date déterminée et/ou au moins une température externe au bâtiment à la date déterminée et/ou au moins une information de rayonnement solaire à la date déterminée.

Les troisièmes caractéristiques de l'environnement du vitrage peuvent comprendre au moins un masque d'ombrage.

Les troisièmes caractéristiques de l'environnement du vitrage peuvent comprendre au moins une localisation géographique du vitrage.

Les troisièmes caractéristiques de l'environnement du vitrage peuvent comprendre au moins une orientation du vitrage par rapport à un repère cardinal.

Les premières caractéristiques du vitrage peuvent comprendre au moins un premier coefficient de transmission thermique lié à un gradient de température entre deux faces du vitrage et/ou au moins un deuxième coefficient de transmission solaire au travers du vitrage.

Les deuxièmes caractéristiques de l'occultant peuvent comprendre au moins un troisième coefficient de résistance thermique additive de l'occultant et/ou au moins un quatrième coefficient de transmission thermique de l'occultant et/ou au moins un cinquième coefficient de réflexion énergétique de l'occultant et/ou une indication de position de montage interne ou externe de l'occultant par rapport au bâtiment.

Les premières caractéristiques du vitrage peuvent comprendre au moins une dimension du vitrage.

Les troisièmes caractéristiques de l'environnement du vitrage peuvent comprendre au moins une température interne au bâtiment et/ou au moins une température externe au bâtiment.

Les troisièmes caractéristiques de l'environnement du vitrage peuvent comprendre au moins une information de rayonnement solaire.

La présente invention vise, selon un deuxième aspect, un procédé de commande d'au moins un dispositif domotique assurant un confort thermique et/ou lumineux dans un bâtiment.

Selon l'invention, le procédé de commande d'au moins un dispositif domotique assurant un confort thermique et/ou lumineux dans un bâtiment, comprend au moins l'étape suivante :
- commande dudit au moins un dispositif domotique en fonction d'au moins une valeur d'échange énergétique et/ou lumineux déterminée à au moins une date déterminée, selon un procédé de détermination défini précédemment.

Le procédé de commande peut comprendre également une étape de détection de présence d'au moins un occupant dans le bâtiment à la date déterminée et l'étape de commande dudit au moins un dispositif domotique peut être fonction du résultat de l'étape de détection.

La présente invention vise, selon un troisième aspect, un dispositif de détermination d'au moins une valeur d'échange énergétique et/ou lumineux au travers d'au moins un vitrage d'un bâtiment.

Selon l'invention, le dispositif de détermination d'au moins une valeur d'échange énergétique et/ou lumineux au travers d'au moins un vitrage d'un bâtiment, comprend des éléments matériels et/ou des éléments logiciels configurés pour mettre en œuvre un procédé de détermination défini précédemment.

La présente invention vise, selon un quatrième aspect, un système de commande d'au moins un dispositif domotique assurant un confort thermique et/ou lumineux dans un bâtiment.

Selon l'invention, le système de commande d'au moins un dispositif domotique assurant un confort thermique et/ou lumineux dans un bâtiment, comprend des éléments matériels et/ou des éléments logiciels configurés pour mettre en œuvre un procédé de commande défini précédemment.

Les dessin annexés représentent, à titre d'exemples nullement limitatifs, un mode de réalisation d'une installation domotique, un mode de réalisation d'un dispositif de détermination d'au moins une valeur d'échange énergétique et/ou lumineux et un mode de réalisation d'un système de commande d'au moins un dispositif domotique selon l'invention, ainsi qu'un mode d'exécution d'un procédé de détermination d'au moins une valeur d'échange énergétique et/ou lumineux et un mode d'exécution d'un procédé de commande d'au moins un dispositif domotique selon l'invention.
[Fig. 1] La figure 1 représente un exemple d'une installation domotique dans laquelle un procédé de détermination d'au moins une valeur d'échange énergétique et/ou lumineux au travers d'au moins un vitrage d'un bâtiment selon un mode d'exécution de l'invention est mis en œuvre au moyen d'un terminal mobile ;
[Fig. 2] La figure 2 représente un mode d'exécution du procédé de détermination d'au moins une valeur d'échange énergétique et/ou lumineux selon l'invention et un mode d'exécution d'un procédé de commande d'au moins un dispositif domotique selon l'invention ;
[Fig. 3] La figure 3 représente un diagramme solaire centré sur le sud, selon un premier exemple de réalisation ;
[Fig. 4] La figure 4 représente le diagramme solaire de la figure 3 sur lequel a été superposé un masque d'ombrage, selon le premier exemple de réalisation, dans un premier cas ;
[Fig. 5] La figure 5 représente le diagramme solaire de la figure 3 sur lequel a été superposé le masque d'ombrage, selon le premier exemple de réalisation, dans un deuxième cas ;
[Fig. 6] La figure 6 représente un masque d'ombrage, selon un deuxième exemple de réalisation ; et
[Fig. 7] La figure 7 représente un diagramme solaire sur lequel a été superposé le masque d'ombrage illustré à la figure 6, selon le deuxième exemple de réalisation. Un mode de réalisation d'une installation domotique 100 est décrit ci-après en référence à la figure 1.

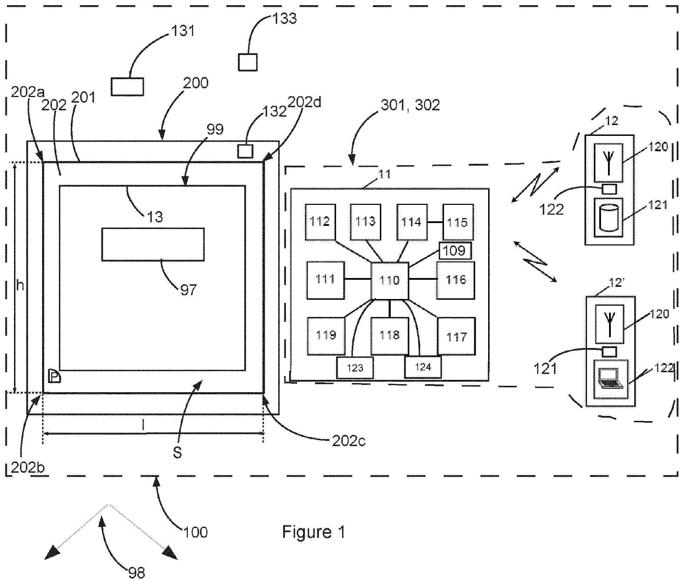

Ici et comme illustré à la figure 1, l'installation domotique 100 comprend un terminal mobile 11, un dispositif domotique 13 et, éventuellement, au moins un serveur distant 12, 12', en particulier un premier serveur distant 12 et un deuxième serveur distant 12'.

Le nombre de terminal mobile, de serveur distant et de dispositif domotique n'est pas limitatif et peut être différent. Il peut être, par exemple, d'un, deux ou plus.

L'installation domotique 100 équipe un bâtiment 200. Avantageusement, le dispositif domotique 13 est installé sur le bâtiment 200 ou dans le bâtiment 200. L'installation domotique 100 peut parfois être appelée système de Gestion Technique du Bâtiment (GTB).

Le bâtiment 200 comprend au moins une ouverture 201 et, plus particulièrement, une pluralité d'ouvertures 201. L'ouverture 201 ou chaque ouverture 201 est configurée pour être fermée par un vitrage 202. Par exemple, le vitrage 202 est un vitrage de fenêtre ou de baie vitrée ou de porte ou de fenêtre de toit.

Par « vitrage », on entend un cadre dormant à l'intérieur duquel est disposé une surface vitrée. La surface vitrée comprend une ou plusieurs vitres, pouvant être transparentes ou translucides, teintées ou non. Dans un cas, le vitrage 202 peut comprendre un cadre dormant et au moins un ouvrant mobile, non représentés, pouvant être déplacé entre une position fermée et une position ouverte par rapport au cadre dormant, et inversement, soit manuellement par un utilisateur soit au moyen d'un dispositif d'entraînement motorisé, non représenté. Un mouvement de l'ouvrant mobile par rapport au cadre dormant peut être mis en œuvre par un mouvement de rotation ou par un mouvement de translation. Dans un autre cas, le vitrage 202 peut comprendre un cadre dormant et une surface vitrée fixe, autrement dit ne pouvant pas être déplacée par rapport au cadre dormant.

Le nombre de vitrages 202 et de dispositifs domotiques 13 associés à une même installation domotique 100 n'est pas limitatif. Préférentiellement, tous les vitrages 202 et les dispositifs domotiques 13 du bâtiment 200 sont associés à l'installation domotique 100, avec une gestion des apports énergétiques et/ou lumineux de manière individuelle ou par groupe.

Sur la figure 1, seuls un vitrage 202 et un dispositif domotique 13 sont représentés pour la clarté de cette figure. De même, la description qui suit fait référence à un vitrage 202 et à un dispositif domotique 13 pour simplifier la lecture. La présente invention s'applique, tout particulièrement, à un bâtiment 200 et, plus particulièrement, à une installation domotique 100 comprenant une pluralité de vitrages 202 et de dispositifs domotiques 13.

Il convient de noter que l'utilisation du terme « terminal mobile » désigne tout type d'appareil mobile susceptible d'être utilisé pour mettre en œuvre les procédés selon l'invention, comme un ordinateur portable, une tablette, un appareil de téléphonie mobile intelligent, etc. Cependant, dans la description suivante, le terme « terminal mobile » renvoie, préférentiellement, à un appareil de téléphonie mobile intelligent (ou *« smartphone »* selon la terminologie anglo-saxonne) ou une tablette tactile.

Un procédé de détermination d'au moins une valeur d'échange énergétique E, Ed et/ou lumineux L, Ld peut être mis en œuvre au moins en partie par tout ordinateur. Au moins une partie du procédé de détermination est mise en œuvre par le terminal mobile 11 , en particulier pour permettre la saisie, autrement dit permettre l'obtention, de paramètres nécessaires à la mise en œuvre du procédé de détermination et pour obtenir les résultats de ce procédé de détermination. En outre, au moins une partie du procédé de détermination peut être mise en œuvre sur l'un des serveurs distants 12, 12' auquel le terminal mobile 11 est configuré pour se connecter, en particulier pour permettre la saisie, autrement dit permettre l'obtention, de paramètres nécessaires à la mise en œuvre du procédé de détermination et pour obtenir les résultats de ce procédé de détermination.

De façon préférentielle mais non obligatoire, le terminal mobile 11, en particulier un appareil de téléphonie mobile intelligent ou une tablette tactile comme mentionné précédemment, peut comprendre soit un dispositif de positionnement par satellites 111, soit un dispositif de détection d'orientation 112, comme, par exemple, un magnétomètre ou un gyroscope ou tout autre capteur configuré pour délivrer au moins un signal électrique représentatif d'une orientation du terminal mobile 11, soit un dispositif de détection d'une inclinaison 113, comme, par exemple, un accéléromètre 113, pouvant être à trois axes, ou tout autre capteur configuré pour délivrer au moins un signal électrique représentatif d'une inclinaison et/ou d'un déplacement du terminal mobile 11, soit une combinaison de l'un de ces dispositifs 111, 112, 113, soit l'ensemble de ces dispositifs 111, 112, 113.

Le terminal mobile 11 peut comprendre un module de communication 114 configuré pour communiquer, soit selon une communication monodirectionnelle soit selon une communication bidirectionnelle, par exemple, avec au moins l'un des serveurs distants 12, 12' selon un protocole de communication. Le module de communication 114 du terminal mobile 11 peut aussi permettre d'émettre des ordres de commande à destination du dispositif domotique 13. Le module de communication 114 peut être connecté à des éléments de communication 115 intégrés ou non au terminal mobile 11.

De façon non limitative, le terminal mobile 11 peut comprendre au moins un module d'affichage 116, par exemple un écran, en particulier un écran tactile permettant la saisie d'informations, au moins un module de traitement d'image 117 et au moins un module de calcul 118.

De façon non limitative, le terminal mobile 11 peut comprendre au moins un module de prise de vue 109, pouvant comprendre, par exemple, un objectif et, éventuellement, un capteur d'image.

Le terminal mobile 11 peut comprendre au moins une unité de traitement 110 et au moins une mémoire 119. L'unité de traitement 110 peut comprendre, par exemple, au moins un processeur, non représenté.

Différents modules 114, 116, 117, 118 du terminal mobile 11 peuvent également comprendre un ou plusieurs microcontrôleurs, microprocesseurs, processeurs, ordinateurs ou tout autre moyen équivalent programmé de façon opportune.

La mémoire 119 du terminal mobile 11 peut être divisée en une pluralité de zones mémoires. Par la suite, les différentes zones mémoires sont désignées par le terme « une mémoire » que le terminal mobile 11 possède une zone mémoire ou une pluralité de zones mémoires. Cette mémoire 119 peut être celle de l'unité de traitement 110, d'un processeur, de l'un des modules 114, 116, 117, 118 ou toute autre mémoire du terminal mobile 11 intégrée ou non dans ce dernier.

Chaque serveur distant 12, 12' peut comprendre au moins un module de communication 120 et au moins une mémoire 121. En outre, chaque serveur distant 12, 12' peut comprendre au moins un service web 122.

Le dispositif domotique 13 comprend, pour chaque vitrage 202 ou pour une partie d'entre eux, au moins un dispositif de fermeture, d'occultation ou de protection solaire, appelé par la suite occultant 99, tel que, par exemple, un volet roulant motorisé, un volet battant motorisé, un store motorisé d'intérieur ou d'extérieur, un store vénitien d'intérieur ou d'extérieur, un brise soleil orientable, un rideau ou un voilage. Chaque vitrage 202 peut avoir plusieurs occultants 99, en particulier un occultant 99 à l'intérieur du bâtiment 200 et un autre occultant 99 à l'extérieur du bâtiment 200. Comme mentionné précédemment, sur la figure 1, seul un occultant 99 constituant un dispositif domotique 13 est représenté pour la clarté de cette figure.

Le dispositif domotique 13 comprend, en outre, au moins un dispositif d'entraînement motorisé 97, pour chaque vitrage 202 ou au moins pour une partie d'entre eux, mettant en mouvement un écran d'un occultant 99 entre au moins une première position et au moins une deuxième position. L'écran peut être constitué, par exemple, d'une ou plusieurs toiles ou d'une pluralité de lames orientables ou non. Chaque occultant 99 peut être associé à un ou plusieurs dispositifs d'entraînement motorisés 97, en particulier à un dispositif d'entraînement motorisé 97 par écran d'un occultant 99. Avantageusement, le dispositif d'entraînement motorisé 97 comprend un actionneur électromécanique d'un élément mobile de fermeture, d'occultation ou de protection solaire, tel qu'un volet roulant, un volet battant, un store enroulable ou plissé, un store vénitien d'intérieur ou d'extérieur ou tout autre matériel équivalent, appelé par la suite écran. L'actionneur électromécanique comprend un moteur électrique, un arbre de sortie et une unité électronique de contrôle, non représentés. En particulier, notamment dans le cas d'un volet roulant ou d'un store, l'actionneur électromécanique peut être un actionneur tubulaire, destiné à être inséré dans un tube d'enroulement sur lequel s'enroule l'écran. En variante, le dispositif d'entraînement motorisé 97 peut être un actionneur linéaire, en particulier pour les brise soleil orientables.

Avantageusement, le dispositif domotique 13 peut, en outre, comprendre un dispositif thermique, comme un dispositif de chauffage, tel que, par exemple, une chaudière, une pompe à chaleur ou un radiateur, et/ou de refroidissement, tel que, par exemple, une climatisation. Le dispositif domotique 13 peut aussi être un dispositif d'éclairage artificiel intérieur.

L'installation domotique 100 peut, en outre, comprendre :
- au moins un capteur d'ensoleillement ou de luminosité 131, notamment à l'intérieur du bâtiment 200 ou à l'extérieur du bâtiment 200, et/ou
- au moins un capteur de température 132 à l'intérieur du bâtiment 200, et/ou
- au moins un capteur de température 133 à l'extérieur du bâtiment 200.

Un seul ou, éventuellement, deux capteurs d'ensoleillement ou de luminosité 131, par exemple disposés sur les façades est et ouest du bâtiment 200, peut ou peuvent suffire, même si le bâtiment 200 présente bien plus qu'une ou deux ouvertures 201 chacune équipées d'un vitrage 202.

Dans le cas où le dispositif domotique 13 comprend au moins un panneau photovoltaïque, non représenté, en particulier pour rendre autonome en énergie électrique le dispositif domotique 13, le panneau photovoltaïque peut être utilisé comme un capteur d'ensoleillement et/ou de luminosité 131.

Dans un exemple de réalisation, non représenté, le ou chaque panneau photovoltaïque, utilisé comme un capteur d'ensoleillement et/ou de luminosité 131, peut être installé sur une toiture du bâtiment 200 ou faire partie intégrante de la toiture du bâtiment 200, dans un tel cas le ou chaque panneau photovoltaïque pouvant être une tuile de la toiture du bâtiment 200.

En variante, non représentée, le ou chaque panneau photovoltaïque, utilisé comme un capteur d'ensoleillement et/ou de luminosité 131, peut être installé au niveau ou sur un occultant 99.

Le terminal mobile 11 et, éventuellement, l'au moins un des serveurs distants 12, 12' forment, d'une part, un dispositif de détermination 301 d'au moins une valeur d'échange énergétique E, Ed et/ou lumineux L, Ld au travers du vitrage 202 du bâtiment 200 et, d'autre part, un système de commande 302 du dispositif domotique 13. Le dispositif de détermination 301 d'au moins une valeur d'échange énergétique E, Ed et/ou lumineux L, Ld comprend des éléments matériels 109, 110, 111, 112, 113, 114, 115, 116, 117, 118, 119, 120, 121, 122, 123, 124 et/ou des éléments logiciels configurés pour mettre en œuvre le procédé de détermination d'au moins une valeur d'échange énergétique E, Ed et/ou lumineux L, Ld conforme à l'invention ou tout ou partie des étapes 1001, 1002, 1003, 1004 du procédé de détermination d'au moins une valeur d'échange énergétique E, Ed et/ou lumineux L, Ld selon l'invention. Les éléments logiciels peuvent comprendre des programmes informatiques ou des modules logiciels. Le dispositif de détermination 301 d'au moins une valeur d'échange énergétique E, Ed et/ou lumineux L, Ld comprend ainsi, notamment :
- des éléments d'obtention 111, 112, 113, 114, 115, 116, 123, 124 de premières caractéristiques C1 du vitrage 202,
- des éléments d'obtention 111, 112, 113, 114, 115, 116, 123, 124 de deuxièmes caractéristiques C2 de l'occultant 99,
- des éléments d'obtention 109, 111, 112, 113, 114, 115, 116, 117, 124 de troisièmes caractéristiques C3 de l'environnement du vitrage 202,
- des éléments 110, 118, 119, 121, 122 de détermination automatique d'au moins une valeur d'échange énergétique E, Ed et/ou lumineux L, Ld au travers du vitrage 202, notamment plusieurs valeurs d'échanges énergétiques E, Ed et/ou lumineux L, Ld au travers du vitrage 202 au cours d'une période temporelle donnée, ce ou ces éléments 110, 118, 119, 121, 122 de détermination automatique utilisant les premières et/ou deuxièmes caractéristiques C1, C2 ainsi que les troisièmes caractéristiques C3,

Le dispositif de détermination 301 peut, en outre, comprendre, notamment :
- des éléments de détermination 110, 116 118, 119, 121, 122, 124 d'une date D,
- des éléments d'obtention 131, 132, 133, 121, 122, 124 de deuxièmes caractéristiques C2d de l'occultant 99 à la date déterminée D et de troisièmes caractéristiques C3d de l'environnement du vitrage 202 à la date déterminée D, et
- des éléments de détermination automatique de la valeur d'échange énergétique Ed et/ou lumineux Ld au travers du vitrage 202 à la date déterminée D, en utilisant :
- au moins une valeur d'échange énergétique E et/ou lumineux L prédéterminée, les deuxièmes caractéristiques C2d et/ou les troisièmes caractéristiques C3d à la date déterminée D, et
- la date déterminée D.

Le système de commande 302 comprend avantageusement :
- des éléments de génération 110, 118, 119 d'un ordre de commande du dispositif domotique 13 en fonction de la valeur d'échange énergétique déterminée Ed et/ou lumineux Ld à la date déterminée D, et
- des éléments d'émission 114, 115 de l'ordre de commande à destination du dispositif domotique 13.

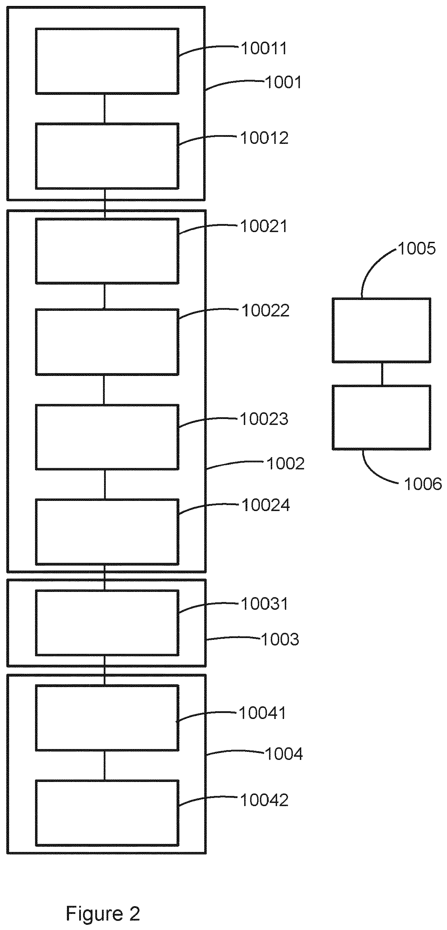

Un mode d'exécution d'un procédé de détermination d'au moins une valeur d'échange énergétique E, Ed et/ou lumineux L, Ld au travers du vitrage 202 du bâtiment 200 est décrit ci-après en référence à la figure 2.

Par « échange énergétique au travers du vitrage », on entend tout échange d'énergie au travers du vitrage 202, y compris une énergie lumineuse à travers le vitrage 202, une énergie thermique échangée par rayonnement à travers le vitrage 202, une énergie thermique échangée par conduction dans l'épaisseur du vitrage 202, une énergie thermique échangée par convection au niveau de la face interne du vitrage 202 ou encore une énergie thermique échangée par convection au niveau de la face externe du vitrage 202.

Ces échanges énergétiques permettent de définir des apports lumineux au travers du vitrage 202 de l'extérieur vers l'intérieur du bâtiment 200. Ces échanges énergétiques permettent aussi de définir des apports thermiques au travers du vitrage 202 de l'extérieur vers l'intérieur du bâtiment 200 et des pertes thermiques au travers du vitrage 202 de l'intérieur vers l'extérieur du bâtiment 200.

Dans tout ce document, à titre d'exemple, les caractéristiques propres aux procédés de détermination et de commande ainsi qu'au dispositif de détermination 301 et au système de commande 302 sont regroupées comme suit :
- les premières caractéristiques C1 relatives au vitrage 202 ;
- les deuxièmes caractéristiques C2 relatives à l'occultant 99 ;
- les troisièmes caractéristiques C3 relatives à l'environnement du vitrage 202.

Les premières caractéristiques C1 peuvent comprendre des constantes temporelles comme, par exemple, un premier coefficient K1 de transmission thermique au travers du vitrage 202 lié à un gradient de température entre deux faces opposées du vitrage 202, une face du vitrage 202 étant disposée de manière à être exposée à un ensoleillement et une autre face opposée du vitrage 202 étant aussi exposée à l'ensoleillement au travers du vitrage 202, un deuxième coefficient K2 de transmission solaire à travers le vitrage 202, au moins une dimension h, l, S du vitrage 202 et le type du vitrage 202.

Les deuxièmes caractéristiques C2 peuvent comprendre :
- des constantes temporelles comme, par exemple, le type d'occultant 99, le type de montage (interne/externe) de l'occultant 99 par rapport au bâtiment 200, un troisième coefficient K3 de résistance thermique additive de l'occultant 99, un quatrième coefficient K4 de transmission thermique au travers de l'occultant 99 lié à un gradient de température entre deux faces opposées de l'occultant 99, un cinquième coefficient K5 de réflexion énergétique de l'occultant 99, et/ou
- des variables temporelles comme, par exemple, un état de déploiement de l'occultant 99, une orientation des lames de l'occultant 99 dans le cas d'un occultant à lames orientables.

Les troisièmes caractéristiques C3 peuvent comprendre :
- des constantes temporelles comme, par exemple, une localisation géographique du vitrage 202 et une orientation du vitrage 202 par rapport à un repère terrestre, notamment un repère cardinal 98, une inclinaison du vitrage 202 par rapport au repère terrestre, un masque solaire M (en supposant que celui-ci n'évolue pas au fil des saisons), et/ou
- des variables temporelles comme, par exemple, la position du soleil, la température interne Ti du bâtiment 200, la température externe Te au bâtiment 200, l'intensité du rayonnement solaire.

Dans une première étape 1001, on obtient :
- les premières caractéristiques C1 du vitrage 202, en particulier par l'intermédiaire du terminal mobile 11 ; et/ou
- les deuxièmes caractéristiques C2 de l'occultant 99, en particulier par l'intermédiaire du terminal mobile 11.

Dans une première sous-étape 10011, on renseigne et on enregistre, dans la mémoire 119 du terminal mobile 11, une ou plusieurs données représentatives d'au moins une dimension h, l, S du vitrage 202.

La ou les données représentatives de dimension h, l, S du vitrage 202 et la ou les données représentatives de l'occultant 99 peuvent être entrées par l'utilisateur, par exemple via l'interface homme machine 124 du terminal mobile 11 et, notamment, sur l'écran tactile du module d'affichage 116.

La ou les données représentatives de dimension h, l, S du vitrage 202 peuvent comprendre une longueur h du vitrage 202 et/ou une largeur l du vitrage 202, dans le cas où le vitrage 202 est de forme rectangulaire. Alternativement, la ou les données représentatives de dimension h, l, S du vitrage 202 peuvent comprendre une donnée d'aire S du vitrage 202 ou encore des données permettant de calculer une telle aire S du vitrage 202 par le module de calcul 118 du terminal mobile 11.

De préférence, la ou les dimensions h, l, S du vitrage 202 sont déterminées grâce à un dispositif de mesure 123 du terminal mobile 11, comme, par exemple, un accéléromètre.

Par exemple, dans le cas où le vitrage 202 est de forme rectangulaire, le terminal mobile 11 peut être positionné successivement aux quatre coins 202a, 202b, 202c, 202d du vitrage 202. Dans un tel cas, l'utilisateur positionne le terminal mobile 11 sur un premier coin 202a du vitrage 202 et valide cette position par un appui sur l'interface homme machine 124 du terminal mobile 11. L'utilisateur déplace ensuite le terminal mobile 11 le long du vitrage 202 jusqu'à un deuxième coin 202b, valide cette position par un nouvel appui sur l'interface homme machine 124 du terminal mobile 11 et réitère ces opérations pour les troisième et quatrième coins 202c, 202d du vitrage 202 et, éventuellement, pour le premier coin 202a du vitrage 202. Puis, le terminal mobile 11 détermine, par analyse des déplacements entre ces quatre coins 202a, 202b, 202c, 202d du vitrage 202, l'aire S du vitrage 202.

Plus généralement, dans le cas où le vitrage 202 est de forme polygonale, le terminal mobile 11 peut être positionné aux différents coins du vitrage 202, puis le terminal mobile 11 détermine, par analyse des déplacements entre ces différents coins du vitrage 202, l'aire S du vitrage 202.

En variante, dans le cas où le vitrage 202 est de forme rectangulaire, le terminal mobile 11 peut être positionné successivement au niveau de deux coins opposés 202a, 202c ou 202b, 202d du vitrage 202 selon une diagonale de ce dernier, puis le terminal mobile 11 détermine, par analyse du déplacement de celui-ci entre ces deux coins 202a, 202c ou 202b, 202d du vitrage 202, l'aire S du vitrage 202.

Les positionnements successifs du terminal mobile 11 au niveau d'une partie ou de la totalité des coins 202a, 202b, 202c, 202d du vitrage 202 peuvent être validés ou signifiés par une action de l'utilisateur sur le terminal mobile 11 et, par exemple, au travers de l'interface homme machine 124 du terminal mobile 11, soit par un appui sur un élément de sélection du terminal mobile 11 ou de l'écran du module d'affichage 116 du terminal mobile 11, soit par une commande vocale, soit par un mouvement rapide et de faible amplitude du terminal mobile 11.

En alternative, la détermination des dimensions du vitrage 202 peut être réalisée en effectuant une prise de vue du vitrage 202 avec le module de prise de vue 109 du terminal mobile 11. Les éléments de localisation 111, 112 du terminal mobile 11 et le module de prise de vue 109 peuvent, avec la réalisation d'un traitement d'image, permettre au terminal mobile 11 de déterminer les dimensions du vitrage 202.

Dans une deuxième sous-étape 10012, on renseigne et on enregistre, dans la mémoire 119 du terminal mobile 11, une ou plusieurs données représentatives d'au moins un coefficient K1, K2 associé au vitrage 202 et au moins un coefficient K3, K4, K5 associé à l'occultant 99, par exemple le premier coefficient K1 de transmission thermique du vitrage 202 et/ou un deuxième coefficient K2 de transmission solaire du vitrage 202, et/ou un troisième coefficient K3 de résistance thermique additive de l'occultant 99 et/ou un quatrième coefficient K4 de transmission thermique de l'occultant 99 et/ou un cinquième coefficient K5 de réflexion énergétique de l'occultant 99. On peut avantageusement ajouter un coefficient de résistance thermique globale du vitrage 202, avec occultant 99, ou des valeurs de transmission et de réflexion lumineuse du vitrage 202 et de l'occultant 99.

Le premier coefficient K1 peut être une valeur de transmission thermique U du vitrage 202. Cette valeur est, par exemple, exprimée en m².K.W⁻¹.

Le deuxième coefficient K2 peut être le facteur transmission solaire ou facteur solaire g du vitrage 202 (ou désigné par l'acronyme SHGC pour le terme anglo-saxon Solar Heat Gain Coefficient). Cette valeur est adimensionnelle.

Le troisième coefficient K3 peut être une valeur de résistance thermique additive ΔR de l'occultant 99. Cette valeur est, par exemple, exprimée en m⁻².K⁻¹.W.

Les quatrième et cinquième coefficients K4, K5 peuvent être des valeurs de transmission énergétique τₑ et de réflexion énergétique ρₑ de l'occultant 99. Ces valeurs sont adimensionnelles.

On peut avantageusement ajouter l'emplacement interne ou externe de l'occultant 99 par rapport au vitrage 202.

Les coefficients K1, K2, K3, K4, K5 peuvent être entrés par l'utilisateur, notamment par l'intermédiaire de l'interface homme machine 124 du terminal mobile 11, puis enregistrés dans la mémoire 119 du terminal mobile 11.

Alternativement ou de manière complémentaire, le type de vitrage du vitrage 202, par exemple simple, double ou triple vitrage peut être entré par l'utilisateur, notamment par l'intermédiaire de l'interface homme machine 124 du terminal mobile 11, puis enregistré dans la mémoire 119 du terminal mobile 11. Ces coefficients peuvent aussi être déduits automatiquement par le terminal mobile 11 ou l'un des serveurs distants 12, 12', à partir d'un questionnaire rempli par l'utilisateur sur le type de vitrage du vitrage 202 et le type d'occultant 99 du dispositif domotique 13.

Dans une deuxième étape 1002, on obtient les troisièmes caractéristiques C3 de l'environnement du vitrage 202, par l'intermédiaire du terminal mobile 11.

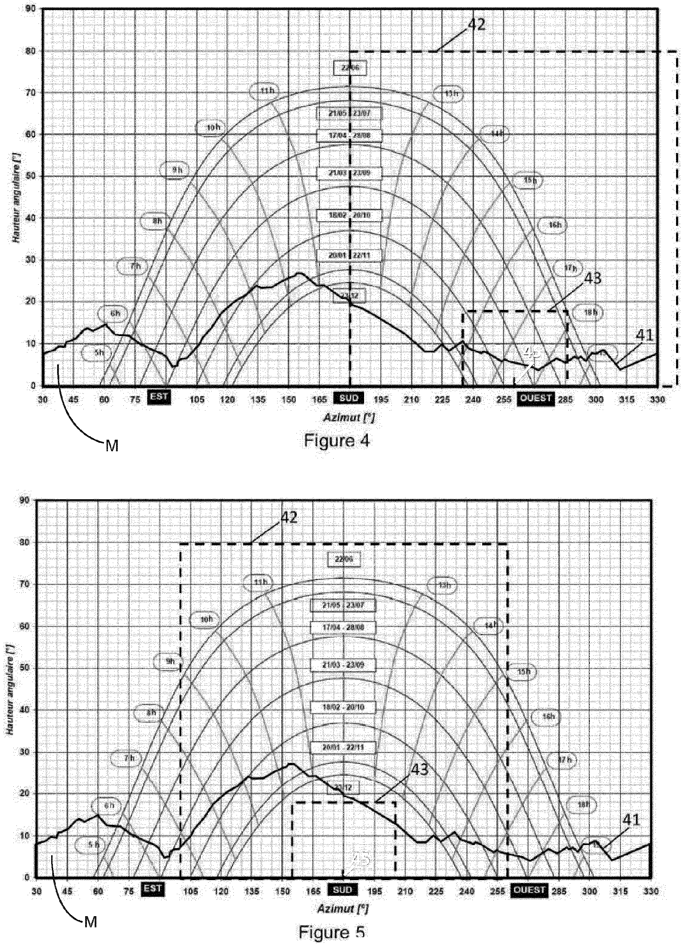

Dans une première sous-étape 10021, on obtient un masque d'ombrage M, autrement dit masque solaire, comme illustré aux figures 4 et 5. De préférence, le masque d'ombrage M est déterminé par le module de prise de vue 109 du terminal mobile 11. Avantageusement, le masque d'ombrage M est déterminé par le module de prise de vue 109 du terminal mobile 11 alors que le terminal mobile 11 est positionné par rapport au vitrage 202, notamment positionné en appui contre une face du vitrage 202 destinée à être exposée à un ensoleillement. De préférence, le terminal mobile 11 est placé en contact avec le vitrage 202 ou à proximité du vitrage 202 sans toutefois que l'axe optique de l'objectif du module de prise de vue 109 du terminal mobile 11 soit parallèle au sol afin d'optimiser les prises de vue. En effet, le fait de positionner l'axe optique du module de prise de vue 109 horizontalement conduit généralement à ce que moins de la moitié de l'image enregistrée est utile pour déterminer les contours du masque d'ombrage M. Pour optimiser les prises de vue, on privilégie les images montrant un maximum de ciel et la limite inférieure du ciel. Par exemple, on incline, vers le ciel, l'axe optique du module de prise de vue 109 d'un angle égal à environ la moitié de son angle de champ en hauteur angulaire.

Cette première sous-étape 10021 permet de définir et d'enregistrer dans la mémoire 119 du terminal mobile 11 une ou plusieurs données du masque d'ombrage M. Le masque d'ombrage M est une surface projetant sur le vitrage 202 un ombrage équivalent ou identique à celui projeté sur le vitrage 202 par tous les éléments de l'environnement du vitrage 202. Le masque d'ombrage M peut être constitué par une ou plusieurs surfaces. Des masques d'ombrage M sont représentés sur les figures 4 et 5. Par exemple, sur ces figures, le masque d'ombrage M inclut tous les points du diagramme qui sont situés sous une ligne d'horizon 41.

Ce masque d'ombrage M est défini par une donnée ou une pluralité de données représentatives du ou des éléments susceptibles de projeter une ombre sur le vitrage 202, en fonction de la position du soleil. Le masque d'ombrage M correspond à tout élément naturel ou artificiel susceptible de venir masquer, à au moins un moment d'une journée et/ou d'une année, tout ou partie du rayonnement solaire direct et/ou indirect incident au niveau du vitrage 202. Il peut s'agir, notamment, de bâtiments ou de parties de bâtiment, comme, par exemple, une avancée de toit, un balcon, de végétation, comme, par exemple, un arbre, une haie, de montagnes ou autres reliefs. Suivant la distance et la hauteur d'un tel élément de masquage par rapport au vitrage 202, le ou chaque élément de masquage engendre une ombre plus ou moins localisée sur le vitrage 202, en fonction de la position du soleil. Le ou chaque élément de masquage lointain forme une ligne d'horizon et génère par leur taille et leur distance une ombre qui peut couvrir, durant certaines plages horaires, une partie ou l'intégralité du vitrage 202, en fonction de la position du soleil.

Ce masque d'ombrage M peut être défini, notamment, par des coordonnées sphériques des points formant le contour du ou des éléments susceptibles de venir masquer le rayonnement solaire sur le vitrage 202. Ce masque d'ombrage M peut être déterminé de différentes manières.

Selon un premier exemple, le masque d'ombrage M peut être défini automatiquement par le terminal mobile 11 à l'aide d'un logiciel applicatif utilisant un algorithme stocké dans la mémoire 119 du terminal mobile 11. L'utilisateur peut prendre une photographie à l'aide du terminal mobile 11, par exemple, via un logiciel applicatif de photographie, en positionnant le terminal mobile 11 sur le vitrage 202 ou à proximité du vitrage 202. L'utilisateur peut prendre la photographie en s'assurant qu'un axe optique de l'objectif du module de prise de vue 109 du terminal mobile 11 et le vitrage 202 sont bien perpendiculaires. Pour cela, le logiciel applicatif de photographie du terminal mobile 11 peut comprendre une aide indiquant à l'utilisateur comment incliner le terminal mobile 11. Pour la suite, on suppose que l'axe optique de l'objectif du module de prise de vue 109 du terminal mobile 11 est perpendiculaire à un boîtier, non représenté, du terminal mobile 11. On suppose également qu'une valeur d'un angle φ formé par le vitrage 202 et une verticale par rapport au sol a été renseignée au préalable. Cette valeur d'angle φ peut, par exemple, avoir été renseignée par l'utilisateur.

En variante, l'utilisateur peut prendre une photographie au moyen d'un appareil photographique, indépendant du terminal mobile 11, positionné sur le vitrage 202 et enregistrer cette photographie dans la mémoire 119 du terminal mobile 11.

Suivant la position du vitrage 202 par rapport au repère cardinal 98, une photographie prise horizontalement au niveau du vitrage 202 peut ne pas capter l'ensemble des informations nécessaires à la définition d'un masque d'ombrage M précis. En effet, une valeur d'un angle de champ de l'objectif du module de prise de vue 109 du terminal mobile 11 est inférieure à celle d'un champ « vu » par le vitrage 202. On rappelle qu'un champ d'un vitrage correspond à un espace angulaire, en azimut et en hauteur angulaire, d'où des rayons lumineux du soleil peuvent impacter le vitrage 202. Pour un vitrage plan, ce champ correspond à un demi-espace. A titre d'exemple nullement limitatif, l'objectif du module de prise de vue 109 du terminal mobile 11 peut prendre un angle de champ de l'ordre de 50° à 90° en azimut et 35° à 65° en hauteur angulaire. Les angles peuvent être différents selon que le terminal mobile 11 est disposé horizontalement ou verticalement.

La figure 4 représente un cas où le vitrage 202 est positionné à un azimut de 260° par rapport au nord. Dans cette configuration, une prise de vue au niveau du vitrage 202 permet de définir de façon relativement précise le masque d'ombrage M. En effet, la zone couverte par l'angle de champ de l'objectif du module de prise de vue 109 du terminal mobile 11 comporte un maximum d'intersections avec les trajectoires du soleil vues à partir du vitrage 202.

La figure 5 représente un autre cas où le vitrage 202 est positionné à un azimut de 180° par rapport au nord. Cette configuration montre que l'angle de champ de l'objectif du module de prise de vue 109 du terminal mobile 11 est trop étroit pour capter l'ensemble des informations nécessaires à la définition d'un masque d'ombrage M précis. De plus, l'intersection entre une enveloppe englobant les trajectoires du soleil au court d'une année et l'angle de champ de l'objectif du module de prise de vue 109 du terminal mobile 11 est assez réduite. Cette valeur d'angle de champ permet néanmoins de capter une zone contenant la course du soleil en hiver. Afin d'augmenter la précision d'obtention du masque d'ombrage M, à la première sous-étape 10021, une première méthode peut consister à augmenter l'angle de champ de l'objectif du module de prise de vue 109 du terminal mobile 11. Cette augmentation peut être obtenue en adaptant sur l'objectif du module de prise de vue 109 du terminal mobile 11 un complément d'optique de façon à obtenir l'équivalent d'un objectif hypergone (ou ^{«} *fisheye"* selon la terminologie anglo-saxonne).

En variante, l'utilisateur peut prendre plusieurs photographies ou un film à partir du vitrage 202 en faisant varier l'azimut et la hauteur angulaire de l'angle de prise de vue de l'objectif du module de prise de vue 109 du terminal mobile 11. Les photographies prises peuvent ensuite être fusionnées de façon à obtenir une photographie panoramique couvrant un champ voisin de celui du vitrage 202. Des données d'orientation et d'inclinaison du terminal mobile 11 sont enregistrées et associées à chaque image enregistrée. Une interface graphique du terminal mobile 11 peut assister l'utilisateur dans la réalisation de ce film ou de ces photos en représentant sur l'écran du module d'affichage 116 du terminal mobile 11 (par exemple en coordonnées polaires) :
- le champ 42 (représenté de manière simplifiée par un cadre de forme rectangulaire) constitué par l'ensemble des directions à partir desquelles le vitrage 202 est susceptible de recevoir des rayons lumineux,
- les zones pour lesquelles une ou plusieurs photographies et/ou un film a déjà été enregistré, et
- éventuellement, un cadre 43 (représenté de manière simplifiée par un cadre de forme rectangulaire) ou une zone pointeur ou curseur indiquant les contours du champ de l'objectif du module de prise de vue 109 du terminal mobile 11 dans sa position courante ou instantanée. Cette position peut être déterminée par le dispositif de détection d'orientation 112.

Le champ 42 peut occuper l'intégralité d'une fenêtre d'interface. Les zones pour lesquelles une ou plusieurs photographies et/ou un film a déjà été enregistré peuvent être représentées dans cette fenêtre par les données photographiques déjà enregistrées, c'est-dire que dans ces zones on a une représentation fidèle de ce que l'on voit réellement. Alternativement, les zones pour lesquelles une ou plusieurs photographies et/ou un film a déjà été enregistré peuvent être représentées dans cette fenêtre par une couleur déterminée ou prédéfinie. Le cadre ou la zone pointeur ou curseur indiquant les contours du champ de l'objectif du module de prise de vue 109 du terminal mobile 11 dans sa position courante ou instantanée peut aussi être représenté dans cette fenêtre par une couleur déterminée ou prédéfinie.

En variante, l'utilisateur ne prend qu'une seule photographie à partir du vitrage 202 et optimise la valeur de l'angle de prise de vue. Cette optimisation a pour but de maximiser les intersections entre la zone couverte par l'objectif du module de prise de vue 109 du terminal mobile 11 et la course du soleil au cours d'une année. A cet effet, la première sous-étape 10021 d'obtention du masque d'ombrage M peut comprendre une sous-étape d'optimisation d'une valeur d'un angle de prise de vue par rapport à une direction de prise de vue perpendiculaire au vitrage 202. De façon avantageuse, cette sous-étape d'optimisation permet de simplifier la définition du masque d'ombrage M tout en gardant une bonne précision de ce dernier. Avantageusement, l'utilisateur effectue des prises de vue faisant apparaître toutes les limites du masque d'ombrage M.

Sur la base de ces prises de vue, le terminal mobile 11 peut calculer la courbe définissant les limites du masque d'ombrage M. Ces limites peuvent comprendre une courbe 41 constituée par l'horizon. De préférence, ce calcul peut être réalisé à l'aide d'un logiciel de traitement d'image, notamment un logiciel permettant de déterminer des contours, sur la base d'analyses de paramètres de luminosité et/ou de contraste et/ou de couleur de pixels des images acquises.

L'angle de prise de vue peut être optimisé. Une fois la valeur de l'angle de prise de vue optimisée, un logiciel applicatif de photographie du terminal mobile 11 peut inviter l'utilisateur à effectuer une photographie au niveau du vitrage 202 avec cet angle de prise de vue. Pour cela, le logiciel applicatif peut comprendre une aide indiquant à l'utilisateur l'inclinaison à donner au terminal mobile 11. A cet effet, le logiciel applicatif peut, par exemple, utiliser la valeur de l'angle fournie par un accéléromètre ou un inclinomètre embarqué dans le terminal mobile 11. Lorsque l'inclinaison de l'axe optique de l'objectif du module de prise de vue 109 du terminal mobile 11 est sensiblement égale à la valeur de l'angle de prise de vue optimisée, le logiciel applicatif peut envoyer un signal comme un signal sonore, un signal lumineux, une vibration, une indication sur l'écran du module d'affichage 116 du terminal mobile 11 ou tout autre type de signal perceptible par l'utilisateur. Par ailleurs, une indication sur l'écran du module d'affichage 116 du terminal mobile 11 peut être prévue pour faciliter la convergence d'orientation du terminal mobile 11 vers la position de prise de vue optimale.

Une fois la prise de vue à partir du vitrage 202 effectuée, le module de traitement d'image 117 du terminal mobile 11 peut parcourir l'image, par exemple, à l'aide d'un algorithme de détection de forme stocké dans la mémoire 119 du terminal mobile 11, afin de détecter automatiquement l'ensemble des éléments susceptibles de masquer totalement ou partiellement le rayonnement solaire sur le vitrage 202 à au moins un moment d'une journée et/ou d'une année et délimiter le masque d'ombrage M. L'algorithme peut également détecter automatiquement la ligne de ciel ou d'horizon 41, c'est-à-dire une ligne de séparation entre le ciel et le sol, sur la photographie. L'algorithme calcule automatiquement des azimuts et des hauteurs angulaires d'un contour de chaque élément faisant obstacle au rayonnement solaire sur le vitrage 202. A titre d'exemple non limitatif, l'algorithme peut utiliser des métadonnées de la photographie, comme, par exemple, l'angle de champ de vision, c'est-à-dire l'ouverture entre les limites latérales du champ de vision, la longueur de focale de l'objectif ou la taille du capteur d'image, pour effectuer des calculs d'azimut et de hauteur angulaire.

En variante, le masque d'ombrage M peut être défini de façon manuelle par l'utilisateur. L'utilisateur peut, par exemple, délimiter sur la photographie, le contour des éléments susceptibles de venir porter une ombre sur le vitrage 202. Il peut, par exemple, délimiter le contour du masque d'ombrage M sur la photographie à l'aide de son doigt, un stylet ou tout autre outil équivalent. Il peut tracer la ligne d'horizon 41 ou déplacer l'image d'une ligne représentative de la ligne d'horizon 41 dans le cas d'un terrain plat ou peu accidenté, afin qu'elle coïncide avec la ligne d'horizon 41 de la vue photographiée.

En variante, l'utilisateur peut déplacer une ou plusieurs formes géométriques sur l'écran du module d'affichage 116 du terminal mobile 11, par exemple, un ou plusieurs carrés ou rectangles, une ou plusieurs lignes, afin d'entourer le ou les éléments susceptibles de masquer totalement ou partiellement le rayonnement solaire sur le vitrage 202 et ainsi définir le masque d'ombrage M de façon grossière.

En variante, l'utilisateur peut déplacer, agrandir ou rétrécir une forme géométrique comme un carré, un rectangle, sur l'écran du module d'affichage 116 du terminal mobile 11, afin que cette forme couvre de manière approximative la partie principale du ciel ne contenant pas d'éléments susceptibles de masquer totalement ou partiellement le rayonnement solaire sur le vitrage 202.

En variante, l'écran du module d'affichage 116 du terminal mobile 11 affiche une mire fixe et l'utilisateur déplace sur 180° autour du vitrage 202 le terminal mobile 11 en faisant suivre la mire sur le contour des obstacles. Au fur et à mesure du déplacement, le module de calcul 118 du terminal mobile 11 détermine l'inclinaison et l'azimut de chaque point et les stocke dans sa mémoire 119, afin de former le masque d'ombrage M.

Une fois le masque d'ombrage M défini, ce dernier peut être enregistré dans la mémoire 119 du terminal mobile 11.

Dans le cas où le bâtiment 200 est entouré de végétation à feuillage caduc, on peut, de préférence, définir deux masques d'ombrage, un premier masque d'ombrage M en présence des feuilles utilisé pour les jours où les feuilles sont présentes dans la végétation et un deuxième masque d'ombrage M en absence des feuilles utilisé pour les jours où les feuilles sont absentes de la végétation.

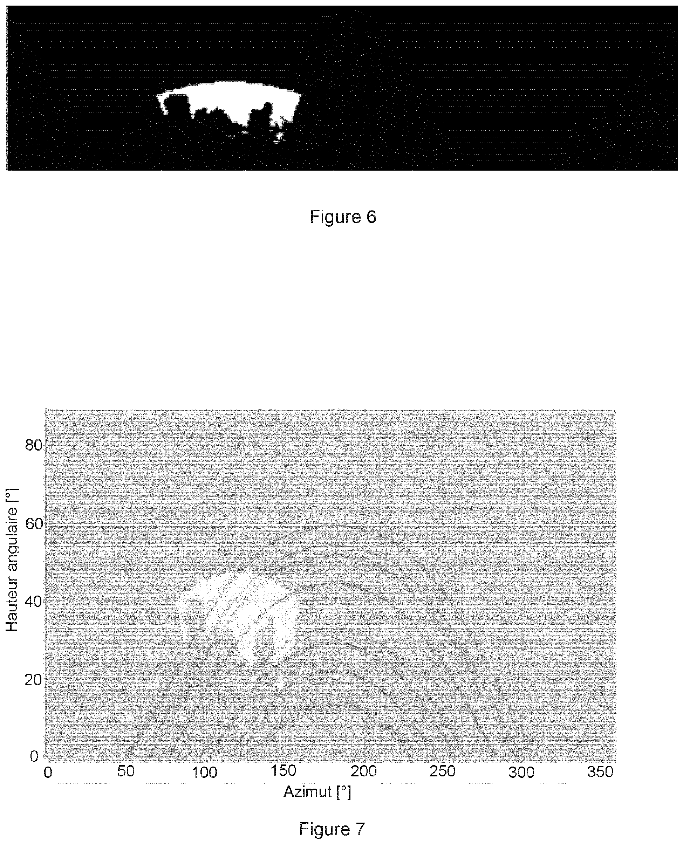

Autrement dit, dans la première sous-étape 10021, on peut exécuter la procédure qui suit, en référence aux figures 6 et 7, et qui met en œuvre le terminal mobile 11 disposant du module de prise de vue 109 et du gyroscope et donnant accès à des paramètres de prise de vue tels que la distance focale ou les dimensions du capteur CCD.

Dans une première phase, on prend plusieurs photos contiguës faisant face au vitrage 202 avec le terminal mobile 11 de manière à couvrir le champ visuel du vitrage 202 (un peu moins de 180° en azimut, et un peu moins de 90° en hauteur angulaire, lorsque le vitrage 202 est disposé verticalement). Lors de chaque prise de vue ou photo, on récupère les données fournies par le gyroscope afin de déterminer la direction des prises de vues.

Dans une deuxième phase, on utilise un algorithme de traitement d'image sur chaque photo afin d'isoler le ciel des autres éléments représentés sur les photos (relief, végétation, bâtiments...). Sur les images résultant du traitement, le ciel est par exemple représenté par un ou plusieurs ensembles de pixels blancs et les autres éléments sont par exemple représentés par un ou plusieurs ensembles de pixels noirs.

Dans une troisième phase, on projette (mathématiquement) les différentes images résultant des traitements de la deuxième phase dans un repère sphérique (coordonnées angulaires d'azimut et de hauteur angulaire), notamment un repère de voute céleste.

Dans une première sous-phase, on exprime chaque pixel des images résultant dans le repère centré au point focal et défini en coordonnées cartésiennes. Il faut pour cela connaître la distance focale et les dimensions du capteur CCD du terminal mobile 11. Dans une deuxième sous-phase, on exprime chaque pixel dans le repère géo-centré exprimé en coordonnées sphériques. Il est nécessaire pour cela de connaître les angles d'Euler (tangage, roulis, lacet) fournis par le gyroscope et d'appliquer les matrices de rotation d'Euler. Le résultat de ce traitement est une matrice binaire (par exemple : 0 si le ciel est visible et 1 si le ciel est masqué) dont les colonnes sont les azimuts et les lignes sont les hauteurs angulaires. Un exemple de résultat de masque d'ombrage M obtenu est représenté par le diagramme de la figure 6 où, dans un repère de coordonnées sphériques, avec, en abscisses, l'azimut et, en ordonnées, la hauteur angulaire, tous les points blancs correspondant à des directions d'où est susceptible de venir un rayonnement solaire direct et tous les points noirs correspondent à des directions d'où ne peut pas venir un rayonnement solaire direct. Dans une deuxième sous-étape 10022, on détermine au moins une température interne Ti au bâtiment 200 et/ou au moins une température externe Te au bâtiment 200.

Par exemple, une donnée de température interne Ti au bâtiment 200 est saisie par l'utilisateur ou prédéfinie. Cette température interne Ti peut être, par exemple, la température moyenne à l'intérieur du bâtiment 200. Cette température interne Ti peut être une température unique, par exemple 22°. Alternativement, la donnée de température interne Ti au bâtiment 200 peut comprendre un ensemble de températures internes associées à des dates au cours d'une période, comme, par exemple, une année. Cette période peut être divisée en intervalles, par exemple des intervalles d'une heure, voire d'une minute, et la température interne Ti au bâtiment 200 peut être associée à chacun des intervalles.

Par exemple, une donnée de température externe Te au bâtiment 200 est obtenue à partir d'une base de données, par exemple une base de données accessible sur internet et associée à la localisation géographique du bâtiment 200 ou à une localisation géographique proche du bâtiment 200. Avantageusement, la donnée de température externe Te au bâtiment 200 peut comprendre un ensemble de températures externes associées à des dates au cours d'une période, comme, par exemple, une année. Cette période peut être divisée en intervalles, par exemple des intervalles d'une heure, et la température externe Te au bâtiment 200 peut être associée à chacun des intervalles.

Alternativement, dans le cas où le procédé de détermination est mis en œuvre pour gérer la lumière dans le bâtiment 200, dans cette deuxième sous-étape 10022, on ne détermine pas de températures. Par contre, on détermine si un ou plusieurs occupants sont présents dans le bâtiment 200. Ceci est, par exemple, effectué en consultant une base de données dans laquelle se trouvent enregistrées des données définissant les périodes de présence des occupants du bâtiment 200 au fil du temps. Dans une troisième sous-étape 10023, on renseigne et on enregistre une ou plusieurs données de position du vitrage 202 dans la mémoire 119 du terminal mobile 11. Les données de position du vitrage 202 peuvent comprendre, notamment, la localisation géographique du vitrage 202, l'orientation du vitrage 202 par rapport au repère cardinal 98 et/ou l'inclinaison du vitrage 202 par rapport à la surface terrestre ou au repère terrestre.

La position du vitrage 202 peut être déterminée, par exemple, par les paramètres suivants : longitude, latitude, orientation et inclinaison. Une valeur de chacun de ces paramètres fait partie d'une information de position.

Cette troisième sous-étape 10023 est destinée au renseignement et à l'enregistrement de signaux représentatifs de la localisation, de l'orientation et/ou de l'inclinaison du vitrage 202 dans la mémoire 119 du terminal mobile 11. Ces signaux représentatifs de la localisation, de l'orientation et/ou de l'inclinaison du vitrage 202 constituent les données de position.

Ces données de position peuvent, par exemple, être estimées par l'utilisateur en utilisant une ou plusieurs applications mobiles enregistrées dans la mémoire 119 du terminal mobile 11 en se plaçant à proximité du vitrage 202.

La localisation géographique du vitrage 202 peut être fournie, notamment, par des signaux délivrés par le dispositif de positionnement par satellites 111 embarqué dans le terminal mobile 11 (ou désigné par l'acronyme GNSS pour *« Global Navigation Satellite System »* selon la terminologie anglo-saxonne), comme le système GPS (acronyme du terme anglo-saxon Global Positioning System), Galiléo, Glonass ou tout autre système équivalent. Le terminal mobile 11 peut afficher, par exemple, la longitude et la latitude du vitrage 202, au moyen du module d'affichage 116. Suivant un mode de mise en œuvre, le terminal mobile 11 peut afficher, par exemple, un nom d'une ville et/ou un code postal d'une ville où se situe le terminal mobile 11 ou tout autre type de localisation géographique, au moyen du module d'affichage 116. Le terminal mobile 11 peut également afficher une altitude du vitrage 202, au moyen du module d'affichage 116.

La localisation géographique du vitrage 202 peut également être renseignée directement par l'utilisateur, par exemple, lorsque la disponibilité des signaux de positionnement par satellites n'est pas suffisante pour obtenir une estimation de la localisation géographique ou lorsque le terminal mobile 11 n'est pas équipé d'un dispositif de positionnement par satellites 111. Le module d'affichage 116 du terminal mobile 11 peut, par exemple, déclencher, sur l'écran du terminal mobile 11, l'affichage d'une fenêtre ou d'un champ dans lequel l'utilisateur peut entrer des informations sur la localisation géographique du vitrage 202, comme un nom d'une ville et/ou un code postal d'une ville. Ces informations peuvent être renseignées par l'utilisateur, par exemple, à l'aide d'une interface homme-machine 124 du terminal mobile 11, comme un écran tactile, un clavier réel ou virtuel, ou toute autre interface homme-machine équivalente. Par la suite, le module de communication 114 du terminal mobile 11 peut interroger le service web 122 sur l'un des serveurs distants 12, 12', via un protocole de communication, afin d'obtenir des coordonnées d'une ville où se situe le terminal mobile 11.

En variante, la localisation géographique du vitrage 202 peut être renseignée directement par l'utilisateur sans avoir à interroger l'un des serveurs distants 12, 12'. En variante, le ou les renseignements entrés par l'utilisateur sur la localisation géographique du vitrage 202 peuvent servir pour vérifier les données de position du vitrage 202 estimées par le terminal mobile 11. Dans le cas où les deux sources d'information coïncident, l'utilisateur peut valider les données de position déterminées par le terminal mobile 11. Dans le cas contraire, l'utilisateur peut réitérer une détermination de localisation géographique du vitrage 202 à l'aide du terminal mobile 11 ou utiliser les données de position estimées par le terminal mobile 11.

Par « orientation », on entend un angle δ formé par une normale à un plan P du vitrage 202 relativement à une direction cardinale.

Par « inclinaison », on entend un angle β formé par la normale au plan P du vitrage 202 relativement à une direction verticale ou à une direction du champ de gravitation terrestre G.

L'orientation du vitrage 202 par rapport au repère cardinal 98 peut être fournie par le terminal mobile 11 positionné sur le vitrage 202 ou selon une orientation similaire à celle du vitrage 202. L'orientation peut, par exemple, être fournie par un logiciel applicatif du terminal mobile 11 utilisant des signaux délivrés par le dispositif de détection d'orientation 112 installé dans le terminal mobile 11.

L'orientation du vitrage 202 par rapport au repère cardinal 98 peut également être renseignée directement par l'utilisateur, par exemple, lorsque le terminal mobile 11 n'est pas équipé du dispositif de détection d'orientation 112 ou dans un but de redondance, de sorte à confirmer la position du vitrage 202 fournie par le terminal mobile 11. De façon avantageuse, cette confirmation peut permettre de compenser un mauvais calibrage et/ou une faible précision du dispositif de détection d'orientation 112 du terminal mobile 11 et/ou une erreur de mesure due à la présence d'un élément perturbant la mesure du champ magnétique terrestre par le dispositif de détection d'orientation 112 du terminal mobile 11, comme un aimant ou tout autre élément magnétique.

En variante, le module de communication 114 du terminal mobile 11 peut interroger, via un protocole de communication, le service web 122, sur l'un des serveurs distants 12, 12', de sorte à obtenir une ou plusieurs données relatives à l'orientation du vitrage 202 par rapport au repère cardinal 98. Cette ou ces données relatives à l'orientation du vitrage 202 par rapport au repère cardinal 98 peuvent provenir, par exemple, de signaux délivrés par le dispositif de positionnement par satellites 111 embarqué dans le terminal mobile 11 ou de données de localisation entrées par l'utilisateur comme un nom d'une ville et/ou un code postal d'une ville. En retour, le module de communication 114 peut recevoir des données représentatives d'une vue satellite correspondant aux données relatives à l'orientation du vitrage 202 par rapport au repère cardinal 98 et les transmettre au module d'affichage 116 du terminal mobile 11. Le module d'affichage 116 peut ensuite afficher sur un écran du terminal mobile 11 la vue satellite correspondante et inviter l'utilisateur à indiquer la localisation géographique du vitrage 202. L'utilisateur peut, par exemple, être invité à sélectionner une maison et une façade de cette maison sur laquelle se trouve le vitrage 202. Cette sélection peut, par exemple, être réalisée, à partir de la vue satellite, en traçant un trait sur une représentation de la façade du bâtiment 200 sur l'écran du terminal mobile 11, à l'aide de son doigt ou d'un stylet. En retour, le module de calcul 118 du terminal mobile 11 peut calculer l'orientation du vitrage 202 par rapport au repère cardinal 98 et stocker une ou plusieurs données représentatives de cette orientation dans la mémoire 119 du terminal mobile 11. De façon avantageuse, cette variante peut permettre d'obtenir automatiquement l'orientation du vitrage 202 par rapport au repère cardinal 98 à l'aide du terminal mobile 11, pouvant être dépourvu du dispositif de détection d'orientation 112 et, plus particulièrement, d'un magnétomètre ou d'un gyroscope. Par ailleurs, cette variante peut permettre de vérifier des données fournies par le dispositif de détection d'orientation 112 du terminal mobile 11 et, plus particulièrement, par un magnétomètre ou un gyroscope, ou, éventuellement, de calibrer le dispositif de détection d'orientation 112 et, plus particulièrement, un magnétomètre ou un gyroscope.

Par exemple, l'orientation du vitrage 202 par rapport au repère cardinal 98 est déterminée par le dispositif de détection d'orientation 112 du terminal mobile 11 alors que le terminal mobile 11 est positionné par rapport au vitrage 202, notamment positionné en appui contre une face du vitrage 202 destinée à être exposée à un ensoleillement.

Suivant un exemple de mise en œuvre du procédé détermination, le terminal mobile 11 peut également déterminer une inclinaison du vitrage 202 par rapport à la surface terrestre, par exemple, en exploitant des signaux électriques délivrés par le dispositif de détection d'une inclinaison 113. Une mesure de l'inclinaison du vitrage 202 par rapport à la surface terrestre peut également être renseignée par l'utilisateur par des moyens similaires à ceux décrits précédemment pour déterminer l'orientation du vitrage 202 par rapport au repère cardinal 98.

En variante, une valeur d'inclinaison du vitrage 202 par rapport à la surface terrestre peut ne pas être mesurée, en particulier dans le cas où le vitrage 202 est approximativement vertical par rapport à la surface terrestre.

Par exemple, l'inclinaison du vitrage 202 par rapport à la surface terrestre est déterminée par le dispositif de détection d'une inclinaison 113 du terminal mobile 11 alors que le terminal mobile 11 est positionné par rapport au vitrage 202, notamment positionné en appui contre une face du vitrage 202 destinée à être exposée à un ensoleillement.

Une fois déterminées et, éventuellement, vérifiées, ces différentes données de position du vitrage 202 peuvent être stockées dans la mémoire 119 du terminal mobile 11.

Tout ou partie de cette troisième sous-étape 10023 peut être réexécutée en cas d'erreur de mesure, comme une erreur de positionnement du terminal mobile 11 par rapport au vitrage 202.

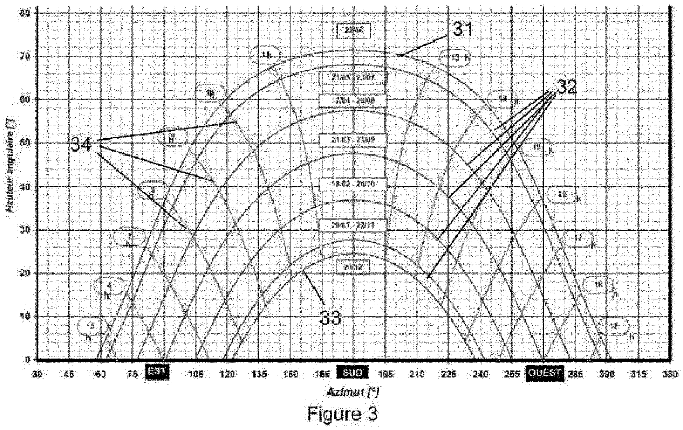

La localisation du vitrage 202 déterminée précédemment permet de définir un diagramme solaire associé au vitrage 202, comme illustré aux figures 3 à 5. L'orientation du vitrage 202 permet de définir la partie du diagramme solaire qu'il est pertinent de considérer.

Un ou plusieurs résultats de la troisième sous-étape 10023 permettent, dans une quatrième sous-étape 10024, de déterminer et d'enregistrer, dans la mémoire 119 du terminal mobile 11, des données représentatives du diagramme solaire associé au vitrage 202.

Pour rappel, le diagramme solaire, également appelé diagramme des trajectoires du soleil, indique, pour différents instants d'une année, une hauteur angulaire (également appelée hauteur d'angle ou élévation) du soleil et un azimut d'une projection horizontale d'un rayon solaire pour une latitude donnée. Ce diagramme solaire permet de définir une trajectoire du soleil perçue à partir d'un lieu déterminé pour différents jours d'une année.

Un tel diagramme solaire peut comprendre, pour différents instants d'une journée et pour différents jours d'une année, une position du soleil par rapport au vitrage 202, par exemple, en coordonnées sphériques. Ce diagramme solaire permet de définir, en faisant abstraction des conditions météorologiques, des instants pendant lesquels il existe un rayonnement solaire direct incident sur le vitrage 202.

La figure 3 est un exemple de représentation graphique d'un diagramme solaire pour une latitude et une longitude données. Chaque courbe 31, 32, 33 représente une course apparente du soleil en fonction de l'heure pour une date particulière d'une année. Par exemple, les courbes référencées 31 et 33 représentent respectivement la course apparente du soleil au solstice d'été et au solstice d'hiver. Ces deux courbes 31, 33 permettent de définir une enveloppe dans laquelle se situent les différentes courses apparentes du soleil, pour la latitude et la longitude considérées, au cours d'une année complète. Les courbes référencées 34 représentent différentes heures particulières d'une journée. Cette figure 3 permet de visualiser, pour une latitude donnée, un azimut et une hauteur angulaire du soleil à différents instants d'une année. Par exemple, à la latitude et la longitude considérées, le 22 juin à 10h (heure solaire), le soleil a une hauteur angulaire de 58°, par rapport à l'horizon, et son azimut est à 118° vers l'est, par rapport au nord.

Afin d'estimer le diagramme solaire au niveau du vitrage 202, le module de communication 114 du terminal mobile 11 peut interroger, via un protocole de communication, le service web 122 avec les données de position du vitrage 202. En retour, le module de communication 114 peut recevoir les positions du soleil, par exemple en coordonnées sphériques, pour différents instants d'une année. Ces positions du soleil peuvent, par exemple, être reçues pour chaque minute et chaque jour d'une année.

En variante, des données du diagramme solaire peuvent être moins précises et, par exemple, ne comporter les positions du soleil que pour chaque semaine, chaque mois de l'année ou toute autre période régulière. Dans ce cas, les données manquantes peuvent, par exemple, être extrapolées ou considérées comme identiques pour chaque jour de la période considérée.

En variante, le module de calcul 118 du terminal mobile 11 peut calculer des données du diagramme solaire pour le vitrage 202 à partir d'un algorithme stocké dans la mémoire 119 du terminal mobile 11.

En variante, le terminal mobile 11 peut contenir dans la mémoire 119 du terminal mobile 11 des tableaux de données de diagramme solaire pour différentes latitudes. Lors de l'étape d'estimation des données représentatives du diagramme solaire associé au vitrage 202, le module de calcul 118 du terminal mobile 11 sélectionne le tableau de données correspondant à la latitude la plus proche de la position du vitrage 202.

Dans une troisième étape 1003, on détermine automatiquement au moins une valeur d'échange énergétique E et/ou lumineux L au travers du vitrage 202, notamment plusieurs valeurs d'échange énergétique E et/ou lumineux L au travers du vitrage 202 au cours d'une période temporelle donnée, à partir :
- des premières et/ou deuxièmes caractéristiques C1, C2 ; et
- des troisièmes caractéristiques C3,
obtenues précédemment dans les première et deuxième étapes 1001, 1002.

De préférence, on obtient ici une ou des valeurs d'échanges énergétique E et/ou lumineux L pour une période d'une année et en faisant une hypothèse sur les températures interne et externe Ti, Te au bâtiment 200 et sur le rayonnement solaire impactant le vitrage 202. Pour calculer automatiquement ces valeurs d'échange énergétique E et/ou lumineux L au travers du vitrage 202, on considère, par exemple, des valeurs moyennes de rayonnement solaire qui sont retenues comme hypothèses et associées à chaque intervalle d'échantillonnage.

Dans une quatrième étape 1004, on détermine automatiquement une valeur d'échange énergétique Ed et/ou lumineux Ld au travers du vitrage 202 du bâtiment 200 à au moins une date déterminée D, notamment à une date présente ou future. Pour ce faire, dans une première sous-étape 10041, on détermine l'au moins une date D à laquelle on doit déterminer la valeur d'échange énergétique Ed et/ou lumineux Ld. L'au moins une date D peut comprendre toutes les dates d'une année, ces dates D étant séparées les unes des autres par un intervalle donné, par exemple un intervalle d'une heure, voire un intervalle d'une minute.

Dans une deuxième sous-étape 10042, on détermine des deuxièmes caractéristiques C2d de l'occultant 99 à la date déterminée D ou aux dates déterminées D à la première sous-étape 10041 et/ou des troisièmes caractéristiques C3d de l'environnement du vitrage 202 à la date déterminée D ou aux dates déterminées D à la première sous-étape 10041.

Les troisièmes caractéristiques C3d à la date déterminée D comprennent une information de rayonnement solaire à la date déterminée D. Cette information peut être fournie par le capteur d'ensoleillement ou de luminosité 131, notamment à l'extérieur du bâtiment 200. Alternativement, le module de communication 114 du terminal mobile 11 peut interroger, via un protocole de communication, le service web 122 avec les données de position du vitrage 202. En retour, le module de communication 114 peut recevoir la valeur courante de rayonnement solaire ou une ou des prévisions de rayonnement solaire pour une période considérée. Ces valeurs de rayonnement solaire peuvent, par exemple, être reçues pour chaque minute et chaque jour d'une année.

La ou les valeurs de rayonnement solaire peuvent être des puissances chiffrées de rayonnement solaire ou un indice de clarté de l'atmosphère ou encore simplement une information binaire de présence ou d'absence de rayonnement solaire à la date déterminée D ou aux dates déterminées D.

Les troisièmes caractéristiques C3d à la date déterminée D peuvent comprendre au moins une information de température interne Ti au bâtiment 200 à la date déterminée D et/ou une information de présence dans le bâtiment 200 à la date déterminée D. Cette information peut être fournie par le capteur de température 132 interne au bâtiment 200, un capteur de présence ou des données constituant un planning des présences. Alternativement, la température interne Ti peut avoir été prédéfinie.

Les troisièmes caractéristiques C3d à la date déterminée D peuvent comprendre au moins une information de température externe Te au bâtiment 200 à la date déterminée D. Cette information peut être fournie par le capteur de température 133 externe au bâtiment 200. Alternativement, le module de communication 114 du terminal mobile 11 peut interroger, via un protocole de communication, le service web 122 avec les données de position du vitrage 202. En retour, le module de communication 114 peut recevoir la valeur courante de la température externe Te ou une ou des prévisions de température externe Te pour une période considérée. Ces valeurs de température externe Te peuvent, par exemple, être reçues pour chaque minute et chaque jour d'une année.

Comme vu précédemment, les deuxièmes caractéristiques C2d à la date déterminée D peuvent comprendre un état de déploiement de l'occultant 99 et/ou une orientation des lames de l'occultant 99 dans le cas d'un occultant à lames orientables. Par exemple, dans le cas d'un store présentant une toile enroulable, un état de déploiement peut être caractérisé par un degré d'enroulement de la toile. Par exemple, dans le cas d'un store à lames, notamment un store à lames orientables, un état de déploiement peut être caractérisé par un degré d'enroulement de cordons de suspension de la toile. En outre, dans le cas d'un store à lames, un état d'orientation des lames peut également être déterminé et commandé. Ces états de l'occultant 99 peuvent évoluer dans le temps en fonction des commandes reçues et exécutées par l'occultant 99. Bien entendu, l'état de l'occultant 99 a une influence majeure sur la valeur d'échange énergétique et/ou lumineux E, Ed, L, Ld au travers du vitrage 202 et il est tenu compte de ces états dans la détermination de la valeur d'échange. De cette manière, on détermine automatiquement la valeur d'échange énergétique Ed et/ou lumineux Ld au travers du vitrage 202 à la date déterminée D à partir de l'au moins une valeur d'échange énergétique E obtenue précédemment à la troisième étape 1003, des deuxièmes caractéristiques C2d à la date déterminée D et/ou des troisièmes caractéristiques C3d à la date déterminée D obtenues précédemment et de l'au moins une date déterminée D précédemment.

Par exemple, la valeur d'échange énergétique Ed à la date déterminée D peut être décomposée en :
- une valeur d'échange énergétique Ec par conduction et/ou par convection, et
- une valeur d'échange énergétique Er par rayonnement,
selon la formule Ed=Ec+Er.

La valeur d'échange énergétique Ec par conduction et/ou par convection est donnée par la formule :
Ec=S×(Te-Ti)/K1, avec :
K1 : le premier coefficient de transmission thermique (par conduction et/ou par convection) au travers du vitrage 202,
S : l'aire du vitrage 202,
Te : la température externe au bâtiment 200, et
Ti : la température interne au bâtiment 200.

La valeur d'échange énergétique Er par rayonnement est donnée par la formule :
Er=K2×R×S×f, avec :
K2 : le deuxième coefficient de transmission solaire au travers du vitrage 202,
R : le rayonnement solaire, par exemple 1000 W.m⁻²,
S : l'aire du vitrage 202,
f : une fonction dont la valeur varie entre 0 et 1 et dépend de la position du soleil (donc de la date) et de la clarté de l'atmosphère. Notamment, f vaut 0 lorsque le soleil est masqué et f vaut 1 lorsque le ciel est dégagé et lorsque les rayons du soleil sont perpendiculaires au vitrage 202.

La valeur d'échange énergétique Ed et/ou lumineux Ld à la date déterminée D peut également inclure une quantification de la quantité de lumière reçue dans le bâtiment 200 à partir de l'extérieur du bâtiment 200.

Les valeurs d'échange énergétique Ed positives à une date déterminée D correspondent à de l'énergie reçue par le bâtiment 200. Les valeurs d'échange énergétique Ed négatives à une date déterminée D correspondent à de l'énergie perdue par le bâtiment 200.

Comme indiqué à la quatrième étape 1004, ces valeurs d'échange énergétique Ed et/ou lumineux Ld aux dates déterminées D peuvent être calculées automatiquement pour définir des valeurs de référence Ev calculées pour des situations définies à différents moments de l'année dans des conditions définies (par exemple des conditions moyennes). Ces valeurs de référence Ev peuvent alors être modifiées pour tenir compte de conditions effectives ou réelles aux dates déterminées D où l'on souhaite connaître effectivement la valeur d'échange énergétique Ed et/ou lumineux Ld.

Autrement dit, les échanges énergétiques au travers du vitrage 202 peuvent être obtenus par calcul en exploitant un modèle mathématique, par exemple, stocké dans la mémoire 119 du terminal mobile 11.

Pour chaque jour de l'année, le modèle de rayonnement fournit une courbe théorique du rayonnement solaire en fonction du temps et en condition de temps clair. Ce modèle théorique permet d'estimer le rayonnement solaire, en temps clair, sur une zone géographique en fonction, notamment, de la date, de l'heure de la position du vitrage 202, notamment de la localisation géographique, par exemple la longitude et la latitude, de l'orientation et/ou de l'inclinaison du vitrage 202.

A l'aide de ces données théoriques, le module de calcul 118 du terminal mobile 11 peut ensuite établir un gisement solaire pour chaque jour de l'année et chaque heure du jour ou pour chaque heure de chaque journée type de chaque mois de l'année et appliquer une pondération pour prendre en compte des phénomènes météorologiques se produisant effectivement à une date donnée (nuages, ...).

En variante, la mémoire 119 du terminal mobile 11 peut contenir des tableaux de valeurs moyennes d'ensoleillement pour des zones géographiques. A partir des différentes données moyennes d'ensoleillement du vitrage 202, de la course du soleil au cours de la journée, de la position du soleil au cours de l'année, le module de calcul 118 du terminal mobile 11 peut estimer les échanges énergétiques au travers vitrage 202 à l'aide d'un algorithme stocké dans la mémoire 119 du terminal mobile 11.

Afin de prendre en compte l'environnement réel du vitrage 202, la troisième étape 1003 peut comprendre une première sous-étape de superposition 10031 des données moyennes d'ensoleillement avec celles du masque d'ombrage M défini précédemment. Un exemple de résultat de superposition d'un masque d'ombrage M et d'un diagramme solaire est représenté par le diagramme de la figure 7.

En superposant ces données, le module de calcul 118 du terminal mobile 11 peut ainsi estimer le rayonnement solaire moyen réellement reçu par le vitrage 202 en pondérant l'énergie solaire théoriquement reçue avec les données du masque d'ombrage M. Cette pondération a pour but de prendre en compte les pertes de rayonnement solaire dues aux différents éléments susceptibles d'intercepter la lumière arrivant sur le vitrage 202 et d'y projeter une ombre. Le rayonnement solaire moyen réellement reçu par le vitrage 202 peut être calculé pour chaque jour de l'année avec un intervalle d'échantillonnage d'une période bien inférieure à un jour, par exemple une heure, voire une minute.

Le procédé de détermination comprend un calcul de valeur d'échange énergétique E et/ou lumineux L. Ce calcul est réalisé à partir de l'évolution de l'amplitude du rayonnement solaire reçu par le vitrage 202.

A partir de l'évolution de l'amplitude du rayonnement solaire reçu au niveau du vitrage 202, le module de calcul 118 du terminal mobile 11 peut calculer l'énergie échangée au travers du vitrage 202.

Durant cette étape, le module de calcul 118 du terminal mobile 11 estime l'énergie échangée sur des périodes d'échantillonnage de l'année. Le calcul est effectué à partir du rayonnement solaire moyen réellement reçu par le vitrage 202. Pour cela, le module de calcul 118 du terminal mobile 11 prend en compte les données du masque d'ombrage M et les caractéristiques techniques du vitrage 202. De façon préférentielle, le module de calcul 118 du terminal mobile 11 estime l'énergie échangée au cours de chaque jour de l'année et idéalement pour chaque intervalle d'échantillonnage.

En alternative, on peut déterminer une valeur courante ou en temps réel d'échange énergétique au travers d'au moins un vitrage 202 du bâtiment 200 en mettant en œuvre les étapes suivantes, après avoir obtenu les premières caractéristiques C1 du vitrage 202 et/ou les deuxièmes caractéristiques C2 courantes ou en temps réel :
- obtention 1002 des troisièmes caractéristiques C3 courantes ou en temps réel,
- détermination 1003 automatique d'au moins une valeur d'échange énergétique E au travers du vitrage 202 à partir :

- des premières et/ou deuxièmes caractéristiques C1, C2 obtenues précédemment, et
- des troisièmes caractéristiques C3 obtenues précédemment.

Avec une telle alternative, on accède à une valeur courante ou en temps réel d'échange énergétique au travers d'au moins un vitrage 202 du bâtiment 200 sans avoir à calculer des valeurs d'échange énergétique de référence Ev calculées pour des situations définies à différents moments de l'année dans des conditions définies. Les première, deuxième, troisième et, éventuellement, quatrième étapes 1001, 1002, 1003, 1004 sont itérées sur plusieurs ouvertures 201 du bâtiment 200 équipées chacune d'un vitrage 202, voire sur toutes les ouvertures 201 du bâtiment 200 équipées chacune d'un vitrage 202.

Un mode d'exécution du procédé de commande de l'au moins un dispositif domotique 13 assurant un confort thermique et/ou lumineux dans le bâtiment 200, en fonction de l'au moins une valeur d'échange énergétique déterminée E, Ed et/ou lumineux L, Ld au travers du vitrage 202 du bâtiment 200, en particulier à une date déterminée D, est décrit ci-après en référence à la figure 2.

Dans une cinquième étape 1005 facultative, on détecte la présence d'au moins un occupant dans le bâtiment 200 à la date déterminée D.

Dans une sixième étape 1006, on commande le dispositif domotique 13 en fonction de la valeur d'échange énergétique Ed et/ou lumineux Ld déterminée à la date déterminée D ou des valeurs d'échange énergétique Ed et/ou lumineux Ld déterminées aux dates déterminées D. Avantageusement, on commande l'au moins un dispositif domotique 13 en fonction du résultat de l'étape de détection précédente 1005. Par exemple, dans cette étape 1006, le terminal mobile 11 peut générer un ordre de commande du dispositif domotique 13 ou générer une instruction de modification d'un ordre de commande du dispositif domotique 13. Cet ordre de commande ou cette instruction de modification d'ordre de commande est envoyé par le terminal mobile 11 à destination du dispositif domotique 13. Cet ordre de commande ou cette instruction de modification d'ordre de commande est fonction de la valeur d'échange énergétique Ed et/ou lumineux Ld déterminée à la date déterminée D ou des valeurs d'échange énergétique Ed et/ou lumineux Ld déterminées aux dates déterminées D.

Cet ordre de commande ou cette instruction de modification d'ordre de commande peut comprendre, notamment :
- un ordre de fonctionnement d'au moins un dispositif domotique 13 de chauffage, de climatisation, d'éclairage artificiel et/ou
- un ordre de déplacement d'un élément mobile d'au moins un dispositif domotique 13 de fermeture, d'occultation et/ou de protection solaire.

Par exemple, nous supposons qu'il est 10h et que la température interne Ti du bâtiment 200 est de 15°C et qu'une consigne de température interne Tic du bâtiment 200 est définie à 22°C à partir de 14h. Le dispositif domotique 13 ayant connaissance de ces informations et déterminant que 6 kW.h sont nécessaires pour atteindre cette consigne de température interne Tic va, par exemple, commencer à produire 2000 W de chauffage à partir de 11h afin que la consigne de température interne Tic de 22°C soit atteinte dans le bâtiment 200 à 14h.

Dans le cas où le terminal mobile 11, ou plus généralement l'installation domotique 100, a maintenant connaissance, en déterminant des valeurs d'échange énergétiques Ed et/ou lumineux Ld au travers du vitrage 202 du bâtiment 200 durant la période allant de 11h à 14h, des échanges énergétiques qui vont se produire durant la période mentionnée, l'opération de chauffage peut être modifiée. Par exemple, si 3 kW vont être reçus par rayonnement solaire au travers du vitrage entre 11h et 14h, le dispositif domotique 13 est commandé pour fournir seulement une puissance de 1000 W de chauffage entre 11h et 14h. Alternativement, par exemple, si 8 kW vont être reçus par rayonnement solaire au travers du vitrage 202 entre 11 heures et 14 heures, le dispositif domotique 13 ne produira pas de chauffage entre 11 heures et 14 heures et un dispositif domotique 13 de type store sera commandé pour déployer son écran devant le vitrage 202 et éviter que 8 kW soient apportés au bâtiment 200, car seulement 6 kW sont nécessaires pour obtenir la température de consigne interne Tic de 22°C à 14h.

L'ordre de commande ou une instruction de modification d'ordre de commande peut aussi être fonction d'un apport lumineux reçu de l'extérieur du bâtiment 200 au travers du vitrage 202.

Dans cette sixième étape 1006, on suppose que la détermination d'échange énergétique et/ou lumineux au travers de chaque vitrage 202 a été faite et que les informations obtenues ont, par exemple, été transmises à l'un des serveurs distants 12, 12'. Le serveur distant 12, 12' dispose ainsi d'informations clés pour gérer le confort thermique et/ou lumineux de chaque pièce du bâtiment 200.

Ces différentes informations sont ensuite utilisées pour élaborer un algorithme de gestion des dispositifs domotiques 13 installés sur ou dans le bâtiment 200, en particulier les dispositifs domotiques 13 de protection solaire. L'algorithme est, par exemple, destiné à commander les dispositifs domotiques 13 de protection solaire des différentes ouvertures 201 du bâtiment 200 équipées chacune d'un vitrage 202, afin de moduler les échanges thermiques et/ou lumineux du bâtiment 200 au niveau des ouvertures 201 tout au long de l'année. La gestion est organisée de façon automatique en fonction de la consigne de température interne Tic ou de la luminosité interne. La valeur de cette consigne de température interne Tic peut être une valeur de température de confort par défaut ou une valeur imposée par l'utilisateur par l'intermédiaire d'un thermostat, non représenté. La valeur de luminosité interne peut être l'éclairage arrivant, dans une direction donnée, sur le bureau d'un utilisateur typiquement horizontalement face à l'utilisateur, à proximité du vitrage 202.

Si les données ont été fournies par l'utilisateur, l'algorithme de gestion peut prendre en compte l'isolation et/ou l'inertie thermique du bâtiment 200, ou la réflectivité interne.

En été, l'algorithme pilote les dispositifs domotiques 13 de protection solaire afin de bloquer au maximum les apports thermiques du soleil tout en en prenant en compte les besoins en lumière naturelle des pièces du bâtiment 200. A cet effet, l'algorithme peut décider de moduler la fermeture d'un ou plusieurs écrans de dispositifs domotiques 13 de protection solaire. Il peut également décider de ne pas masquer certaines vitrages 202 à l'aide de dispositifs domotiques 13 de protection solaire, par exemple des vitrages 202 à travers lesquelles le transfert thermique avec l'extérieur du bâtiment 200 est minimum.

L'algorithme commande les dispositifs domotiques 13 de protection solaire afin de faire tendre la valeur de la température de chaque pièce du bâtiment 200 vers la valeur de la consigne de température interne Tic et idéalement l'égaler. Lorsque le bâtiment 200 ou la pièce du bâtiment 200 est équipé d'un dispositif domotique 13 de climatisation, ce dispositif domotique 13 de climatisation prend le relais afin de réduire la différence entre la température de la pièce et la valeur de la consigne de température interne Tic. De même, l'éclairage artificiel peut prendre le relais de la luminosité naturelle venant de l'extérieure.

En hiver, l'algorithme gère les dispositifs domotiques 13 de protection solaire de façon à favoriser les apports thermiques solaires. Un dispositif domotique 13 de chauffage prend ensuite le relais pour compléter les apports solaires grâce à un chauffage d'appoint qui n'entre en service que le plus rarement possible, tout en évitant, si nécessaire, l'éblouissement des utilisateurs.

Cette commande des dispositifs domotiques 13, notamment des dispositifs domotiques 13 de protection solaire est dynamique et évolue en fonction de la course du soleil, du rayonnement solaire au cours d'une journée, etc.

La gestion peut être effectuée en temps réel, par exemple à chaque heure d'une journée.

La gestion peut être combinée avec des données de prévisions météo, par exemple des prévisions à quelques heures, à un jour ou plus.

De façon avantageuse, l'invention permet de considérer les différentes ouvertures 201 du bâtiment 200 équipées chacune d'un vitrage 202 comme des sources d'apport énergétique et lumineux pour les différentes pièces du bâtiment 200.

Elle permet également de disposer d'un algorithme apte à gérer de façon automatique et intelligente les différents dispositifs domotiques 13 de protection solaire du bâtiment 200 tout au long de l'année en fonction des apports thermiques de chaque ouverture 201. La gestion automatique des dispositifs domotiques 13 de protection solaire permet ainsi de protéger une pièce des apports énergétiques extérieurs au bâtiment 200 ou au contraire de récupérer les apports énergétiques de l'environnement extérieur au bâtiment 200.

Dans un exemple de dispositif domotique 13 comprenant un occultant 99 de type « store vénitien » commandé en fonction d'au moins une valeur d'échange énergétique et/ou lumineux déterminée Ed, Ld, en cas de soleil direct, on calcule l'angle d'incidence des rayons du soleil à un instant donné, puis on incline les lames de l'occultant 99 de manière à ce qu'elles soient perpendiculaires aux rayons du soleil.

Dans un autre exemple de dispositif domotique 13 comprenant un occultant 99 de type « screen » commandé en fonction d'au moins une valeur d'échange énergétique et/ou lumineux déterminée Ed, Ld, en cas d'éblouissement (ciel blanc), on ferme partiellement cet occultant 99 en fonction de la transmission lumineuse à travers l'occultant 99 et le vitrage 202.

Dans un autre exemple de dispositif domotique comprenant un occultant de type « volet roulant » commandé en fonction d'au moins une valeur d'échange énergétique et/ou lumineux déterminée Ed, Ld, on évalue les instants optimums de fermeture et d'ouverture de l'occultant 99 en fonction de l'écart de températures entre l'intérieur et l'extérieur, des apports solaires et de la résistance thermique de l'occultant 99, de manière à minimiser les déperditions thermiques.

Les première et deuxième étapes 1001, 1002 peuvent être mises en œuvre dans n'importe quel ordre chronologique.

Les première et deuxième sous-étapes 10011, 10012 de la première étape 1001 peuvent être mises en œuvre dans n'importe quel ordre chronologique.

Les première, deuxième, troisième et quatrième sous-étapes 10021, 10022, 10023, 10024 de la deuxième étape 1002 peuvent être mises en œuvre dans n'importe quel ordre chronologique.

De plus, une ou plusieurs sous-étapes 10021, 10022, 10023, 10024 de la deuxième étape 1002 peuvent être mises en œuvre avant une ou plusieurs sous-étapes 10011, 10012 de la première étape 1001.

L'invention porte aussi sur le dispositif de détermination 301 d'au moins une valeur d'échange énergétique E, Ed et/ou lumineux L, Ld, notamment le terminal mobile 11 ou l'un des serveurs distants 12, 12', comprenant des éléments matériels 109, 110, 111, 112, 113, 114, 115, 116, 117, 118, 119, 120, 121, 122, 123, 124 et/ou des éléments logiciels configurés pour mettre en œuvre le procédé de détermination d'au moins une valeur d'échange énergétique E, Ed et/ou lumineux L, Ld, tel que défini précédemment.

En variante, l'utilisateur peut se connecter, à l'aide de son terminal mobile 11, sur l'un des serveurs distants 12, 12' comprenant au moins une mémoire 121 sur laquelle est enregistré le programme informatique mettant en œuvre le ou les procédés de détermination et de commande.

Un autre objet de la présente invention est un produit programme informatique comprenant des instructions lisibles par un ordinateur ou tout type de dispositif informatique équivalent, comme un terminal mobile, qui, lorsqu'elles sont exécutées par un processeur, amènent le processeur à exécuter les procédés de détermination et de commande tels que décrits précédemment. Suivant un mode de réalisation, le produit programme informatique est téléchargeable à partir d'un réseau de communication et/ou enregistré sur un support de données lisible par un ordinateur et/ou exécutable par un ordinateur.

La présente invention a également pour objet un support d'enregistrement lisible par un processeur, par exemple d'ordinateur ou de tout type de dispositif informatique équivalent, sur lequel est enregistré un programme informatique comprenant des instructions d'exécution des étapes des procédés de détermination et de commande tels que décrits précédemment.

En variante, dans la première étape 1001, on obtient les premières caractéristiques C1 du vitrage 202 et/ou les deuxièmes caractéristiques C2 de l'occultant 99 par l'intermédiaire de l'un des serveurs distants 12, 12' et/ou par l'intermédiaire de l'unité électronique de contrôle de l'actionneur électromécanique du dispositif d'entraînement motorisé 97 de l'occultant 99, en particulier d'une mémoire de celle-ci dans laquelle sont mémorisées les premières et deuxièmes caractéristiques C1, C2.

Les différents modes de mise en œuvre et variantes définis ci-dessus peuvent être combinés pour générer de nouveaux modes de réalisation de l'invention.

Dans tout ce document, par « date », on entend, de préférence, un instant déterminé que l'on peut identifier, notamment, au moins par une année, un mois, un jour et une heure. Ainsi, l'indication de date comprend, de préférence, une indication d'heure. De plus, de préférence, l'indication de date comprend une information de minutes.

## Revendications

1. Procédé de détermination d'au moins une valeur d'échange énergétique et/ou lumineux (E, Ed, L, Ld) au travers d'au moins un vitrage (202) d'un bâtiment (200), le bâtiment (200) comprenant une pluralité d'ouvertures (201), chaque ouverture (201) ou au moins une partie d'entre elles étant configurée pour être fermée respectivement par un vitrage (202), le bâtiment (200) étant équipé d'une installation domotique (100), l'installation domotique (100) comprenant au moins un terminal mobile (11) et au moins un dispositif domotique (13), le dispositif domotique (13) comprenant, pour chaque vitrage (202) ou pour une partie d'entre eux, au moins un occultant (99) et un dispositif d'entraînement motorisé (97), le dispositif d'entraînement motorisé (97) mettant en mouvement un écran de l'occultant (99) entre au moins une première position et au moins une deuxième position, le procédé de détermination étant mis en œuvre au moins en partie par le terminal mobile (11),
le procédé comprenant au moins les étapes suivantes :
- obtention (1001) de premières caractéristiques (C1) du vitrage (202) et/ou de deuxièmes caractéristiques (C2) d'au moins un occultant (99) associé au vitrage (202),
- obtention (1002) de troisièmes caractéristiques (C3) de l'environnement du vitrage (202), par l'intermédiaire du terminal mobile (11),
- détermination (1003) automatique d'au moins une valeur d'échange énergétique et/ou lumineux (E, L) au travers du vitrage (202) à partir des troisièmes caractéristiques (C3) de l'environnement du vitrage (202) obtenues précédemment, lors de la deuxième étape d'obtention (1002), ainsi que des premières caractéristiques (C1) du vitrage (202) et/ou des deuxièmes caractéristiques (C2) de l'occultant (99) obtenues précédemment, lors de la première étape d'obtention (1001),
les étapes d'obtention (1001, 1002) et de détermination (1003) étant itérées sur plusieurs ouvertures (201) du bâtiment (200) équipées chacune d'un vitrage (202).

2. Procédé de détermination d'au moins une valeur d'échange énergétique et/ou lumineux (E, Ed, L, Ld) au travers d'au moins un vitrage (202) d'un bâtiment (200) selon la revendication 1, **caractérisé en ce que** l'étape de détermination (1003) est mise en œuvre pour au moins une date déterminée (D), **en ce que** les deuxièmes caractéristiques (C2) de l'occultant (99) comprennent des deuxièmes caractéristiques (C2d) de l'occultant (99) à la date déterminée (D) et/ou les troisièmes caractéristiques (C3) de l'environnement du vitrage (202) comprennent des troisièmes caractéristiques (C3d) de l'environnement du vitrage (202) à la date déterminée (D) et **en ce que** le procédé comprend, en outre, au moins une étape de détermination (1004) automatique d'au moins une valeur d'échange énergétique et/ou lumineux (Ed, Ld) au travers du vitrage (202) à la date déterminée (D) à partir :
- de la valeur d'échange énergétique et/ou lumineux (E, L) déterminée précédemment, lors de l'étape de détermination (1003),
- des deuxièmes caractéristiques (C2d) de l'occultant (99) à la date déterminée (D) et des troisièmes caractéristiques (C3d) de l'environnement du vitrage (202) à la date déterminée (D), et
- de la date déterminée (D).

3. Procédé de détermination d'au moins une valeur d'échange énergétique et/ou lumineux (E, Ed, L Ld) au travers d'au moins un vitrage (202) d'un bâtiment (200) selon la revendication 2, **caractérisé en ce que** les troisièmes caractéristiques (C3d) de l'environnement du vitrage (202) à la date déterminée (D) comprennent au moins une température interne (Ti) au bâtiment (200) à la date déterminée (D) et/ou au moins une température externe (Te) au bâtiment (200) à la date déterminée (D) et/ou au moins une information de rayonnement solaire à la date déterminée (D).

4. Procédé de détermination d'au moins une valeur d'échange énergétique et/ou lumineux (E, Ed, L, Ld) au travers d'au moins un vitrage (202) d'un bâtiment (200) selon l'une quelconque des revendications 1 à 3, **caractérisé en ce que** les troisièmes caractéristiques (C3) de l'environnement du vitrage (202) comprennent au moins un masque d'ombrage (M).

5. Procédé de détermination d'au moins une valeur d'échange énergétique et/ou lumineux (E, Ed, L, Ld) au travers d'au moins un vitrage (202) d'un bâtiment (200) selon l'une quelconque des revendications 1 à 4, **caractérisé en ce que** les troisièmes caractéristiques (C3) de l'environnement du vitrage (202) comprennent au moins une localisation géographique du vitrage (202).

6. Procédé de détermination d'au moins une valeur d'échange énergétique et/ou lumineux (E, Ed, L, Ld) au travers d'au moins un vitrage (202) d'un bâtiment (200) selon l'une quelconque des revendications 1 à 5, **caractérisé en ce que** les troisièmes caractéristiques (C3) de l'environnement du vitrage (202) comprennent au moins une orientation du vitrage (202) par rapport à un repère cardinal (98).

7. Procédé de détermination d'au moins une valeur d'échange énergétique et/ou lumineux (E, Ed, L, Ld) au travers d'au moins un vitrage (202) d'un bâtiment (200) selon l'une quelconque des revendications 1 à 6, **caractérisé en ce que** les premières caractéristiques (C1) du vitrage (202) comprennent au moins un premier coefficient (K1) de transmission thermique lié à un gradient de température entre deux faces du vitrage (202) et/ou au moins un deuxième coefficient (K2) de transmission solaire au travers du vitrage (202).

8. Procédé de détermination d'au moins une valeur d'échange énergétique et/ou lumineux (E, Ed, L, Ld) au travers d'au moins un vitrage (202) d'un bâtiment (200) selon l'une quelconque des revendications 1 à 7, **caractérisé en ce que** les deuxièmes caractéristiques (C2) de l'occultant (99) comprennent au moins un troisième coefficient (K3) de résistance thermique additive de l'occultant (99) et/ou au moins un quatrième coefficient (K4) de transmission thermique de l'occultant (99) et/ou au moins un cinquième coefficient (K5) de réflexion énergétique de l'occultant (99) et/ou une indication de position de montage interne ou externe de l'occultant (99) par rapport au bâtiment (200).

9. Procédé de détermination d'au moins une valeur d'échange énergétique et/ou lumineux (E, Ed, L, Ld) au travers d'au moins un vitrage (202) d'un bâtiment (200) selon l'une quelconque des revendications 1 à 8, **caractérisé en ce que** les premières caractéristiques (C1) du vitrage (202) comprennent au moins une dimension (h, l, S) du vitrage (202).

10. Procédé de détermination d'au moins une valeur d'échange énergétique et/ou lumineux (E, Ed, L, Ld) au travers d'au moins un vitrage (202) d'un bâtiment (200) selon l'une quelconque des revendications 1 à 9, **caractérisé en ce que** les troisièmes caractéristiques (C3) de l'environnement du vitrage (202) comprennent au moins une température interne (Ti) au bâtiment (200) et/ou au moins une température externe (Te) au bâtiment (200).

11. Procédé de détermination d'au moins une valeur d'échange énergétique et/ou lumineux (E, Ed, L, Ld) au travers d'au moins un vitrage (202) d'un bâtiment (200) selon l'une quelconque des revendications 1 à 10, **caractérisé en ce que** les troisièmes caractéristiques (C3) de l'environnement du vitrage (202) comprennent au moins une information de rayonnement solaire.

12. Procédé de commande d'au moins un dispositif domotique (13) assurant un confort thermique et/ou lumineux dans un bâtiment (200), le procédé comprenant au moins l'étape suivante :
- commande (1006) dudit au moins un dispositif domotique (13) en fonction d'au moins une valeur d'échange énergétique et/ou lumineux déterminée (Ed, Ld) à au moins une date déterminée (D), selon un procédé de détermination conforme à l'une quelconque des revendications 1 à 10 et conforme à la revendication 2.

13. Procédé de commande d'au moins un dispositif domotique (13) assurant un confort thermique et/ou lumineux dans un bâtiment (200) selon la revendication 12, **caractérisé en ce que** le procédé comprend également une étape de détection de présence (1005) d'au moins un occupant dans le bâtiment (200) à la date déterminée (D) et **en ce que** l'étape de commande (1006) dudit au moins un dispositif domotique (13) est fonction du résultat de l'étape de détection (1005).

14. Dispositif de détermination (301) d'au moins une valeur d'échange énergétique et/ou lumineux (E, Ed, L, Ld) au travers d'au moins un vitrage (202) d'un bâtiment (200), le dispositif de détermination (301) comprenant des éléments matériels (109 - 124) et/ou des éléments logiciels configurés pour mettre en œuvre un procédé de détermination d'au moins une valeur d'un échange énergétique et/ou lumineux (E, Ed, L, Ld) selon l'une quelconque des revendications 1 à 11.

15. Système de commande (302) d'au moins un dispositif domotique (13) assurant un confort thermique et/ou lumineux dans un bâtiment (200), le système de commande (302) comprenant des éléments matériels (109 - 124) et/ou des éléments logiciels configurés pour mettre en œuvre un procédé de commande d'au moins un dispositif domotique (13) selon la revendication 12 ou selon la revendication 13.

## Patentansprüche

1. Verfahren zur Bestimmung mindestens eines Werts für Energie- und/oder Lichtaustausch (E, Ed, L, Ld) durch mindestens eine Verglasung (202) eines Gebäudes (200) hindurch, wobei das Gebäude (200) eine Mehrzahl von Öffnungen (201) umfasst, wobei jede Öffnung (201) oder mindestens ein Teil davon dazu ausgestaltet ist, jeweils durch eine Verglasung (202) verschlossen zu werden, wobei das Gebäude (200) mit einer Heimautomationsanlage (100) ausgestattet ist, wobei die Heimautomationsanlage (100) mindestens ein mobiles Endgerät (11) und mindestens eine Heimautomationsvorrichtung (13) umfasst, wobei die Heimautomationsvorrichtung (13) für jede Verglasung (202) oder für einen Teil davon mindestens ein Verdunkelungselement (99) und eine motorisierte Antriebsvorrichtung (97) umfasst, wobei die motorisierte Antriebsvorrichtung (97) einen Schirm des Verdunkelungselements (99) zwischen mindestens einer ersten Stellung und mindestens einer zweiten Stellung in Bewegung versetzt, wobei das Verfahren zur Bestimmung mindestens zum Teil von dem mobilen Endgerät (11) durchgeführt wird,
wobei das Verfahren mindestens die folgenden Schritte umfasst:
- Erhalten (1001) von ersten Merkmalen (C1) der Verglasung (202) und/oder von zweiten Merkmalen (C2) mindestens eines Verdunkelungselements (99), das der Verglasung (202) zugeordnet ist,
- Erhalten (1002) von dritten Merkmalen (C3) der Umgebung der Verglasung (202) über das mobile Endgerät (11),
- automatisches Bestimmen (1003) mindestens eines Werts für Energie- und/oder Lichtaustausch (E, L) durch die Verglasung (202) hindurch ausgehend von den dritten Merkmalen (C3) der Umgebung der Verglasung (202), die zuvor bei dem zweiten Schritt des Erhaltens (1002) erhalten wurden, sowie von den ersten Merkmalen (C1) der Verglasung (202) und/oder von den zweiten Merkmalen (C2) des Verdunkelungselements (99), die zuvor bei dem ersten Schritt des Erhaltens (1001) erhalten wurden,
wobei die Schritte des Erhaltens (1001, 1002) und Bestimmens (1003) für mehrere Öffnungen (201) des Gebäudes (200), die jede mit einer Verglasung (202) ausgestattet sind, wiederholt werden.

2. Verfahren zur Bestimmung mindestens eines Werts für Energie- und/oder Lichtaustausch (E, Ed, L, Ld) durch mindestens eine Verglasung (202) eines Gebäudes (200) hindurch nach Anspruch 1, **dadurch gekennzeichnet, dass** der Schritt des Bestimmens (1003) für mindestens ein bestimmtes Datum (D) durchgeführt wird, dass die zweiten Merkmale (C2) des Verdunkelungselements (99) zweite Merkmale (C2d) des Verdunkelungselements (99) zu dem bestimmten Datum (D) umfassen und/oder die dritten Merkmale (C3) der Umgebung der Verglasung (202) dritte Merkmale (C3d) der Umgebung der Verglasung (202) zu dem bestimmten Datum (D) umfassen und dass das Verfahren ferner mindestens einen Schritt des automatischen Bestimmens (1004) mindestens eines Werts für Energie- und/oder Lichtaustausch (Ed, Ld) durch die Verglasung (202) hindurch zu dem bestimmten Datum (D) umfasst ausgehend von:
- dem Wert für Energie- und/oder Lichtaustausch (E, L), der zuvor bei dem Schritt des Bestimmens (1003) bestimmt wurde,
- den zweiten Merkmalen (C2d) des Verdunkelungselements (99) zu dem bestimmten Datum (D) und den dritten Merkmalen (C3d) der Umgebung der Verglasung (202) zu dem bestimmten Datum (D), und
- dem bestimmten Datum (D).

3. Verfahren zur Bestimmung mindestens eines Werts für Energie- und/oder Lichtaustausch (E, Ed, L, Ld) durch mindestens eine Verglasung (202) eines Gebäudes (200) hindurch nach Anspruch 2, **dadurch gekennzeichnet, dass** die dritten Merkmale (C3d) der Umgebung der Verglasung (202) zu dem bestimmten Datum (D) mindestens eine Innentemperatur (Ti) innerhalb des Gebäudes (200) zu dem bestimmten Datum (D) und/oder mindestens eine Außentemperatur (Te) außerhalb des Gebäudes (200) zu dem bestimmten Datum (D) und/oder mindestens eine Information zur Sonneneinstrahlung zu dem bestimmten Datum (D) umfassen.

4. Verfahren zur Bestimmung mindestens eines Werts für Energie- und/oder Lichtaustausch (E, Ed, L, Ld) durch mindestens eine Verglasung (202) eines Gebäudes (200) hindurch nach einem der Ansprüche 1 bis 3, **dadurch gekennzeichnet, dass** die dritten Merkmale (C3) der Umgebung der Verglasung (202) mindestens eine Beschattungsmaske (M) umfassen.

5. Verfahren zur Bestimmung mindestens eines Werts für Energie- und/oder Lichtaustausch (E, Ed, L, Ld) durch mindestens eine Verglasung (202) eines Gebäudes (200) hindurch nach einem der Ansprüche 1 bis 4, **dadurch gekennzeichnet, dass** die dritten Merkmale (C3) der Umgebung der Verglasung (202) mindestens einen geografischen Standort der Verglasung (202) umfassen.

6. Verfahren zur Bestimmung mindestens eines Werts für Energie- und/oder Lichtaustausch (E, Ed, L, Ld) durch mindestens eine Verglasung (202) eines Gebäudes (200) hindurch nach einem der Ansprüche 1 bis 5, **dadurch gekennzeichnet, dass** die dritten Merkmale (C3) der Umgebung der Verglasung (202) mindestens eine Ausrichtung der Verglasung (202) in Bezug auf ein grundlegendes Koordinatensystem (98) umfassen.

7. Verfahren zur Bestimmung mindestens eines Werts für Energie- und/oder Lichtaustausch (E, Ed, L, Ld) durch mindestens eine Verglasung (202) eines Gebäudes (200) hindurch nach einem der Ansprüche 1 bis 6, **dadurch gekennzeichnet, dass** die ersten Merkmale (C1) der Verglasung (202) mindestens einen ersten Koeffizienten (K1) für Wärmedurchgang, der mit einem Temperaturgradienten zwischen zwei Seiten der Verglasung (202) zusammenhängt, und/oder mindestens einen zweiten Koeffizienten (K2) für solare Transmission durch die Verglasung (202) hindurch umfassen.

8. Verfahren zur Bestimmung mindestens eines Werts für Energie- und/oder Lichtaustausch (E, Ed, L, Ld) durch mindestens eine Verglasung (202) eines Gebäudes (200) hindurch nach einem der Ansprüche 1 bis 7, **dadurch gekennzeichnet, dass** die zweiten Merkmale (C2) des Verdunkelungselements (99) mindestens einen dritten Koeffizienten (K3) für additiven thermischen Widerstand des Verdunkelungselements (99) und/oder mindestens einen vierten Koeffizienten (K4) für Wärmedurchgang des Verdunkelungselements (99) und/oder mindestens einen fünften Koeffizienten (K5) für Energiereflexion des Verdunkelungselements (99) und/oder eine Angabe zur Innen- oder Außenmontageposition des Verdunkelungselements (99) in Bezug auf das Gebäude (200) umfassen.

9. Verfahren zur Bestimmung mindestens eines Werts für Energie- und/oder Lichtaustausch (E, Ed, L, Ld) durch mindestens eine Verglasung (202) eines Gebäudes (200) hindurch nach einem der Ansprüche 1 bis 8, **dadurch gekennzeichnet, dass** die ersten Merkmale (C1) der Verglasung (202) mindestens ein Maß (h, l, S) der Verglasung (202) umfassen.

10. Verfahren zur Bestimmung mindestens eines Werts für Energie- und/oder Lichtaustausch (E, Ed, L, Ld) durch mindestens eine Verglasung (202) eines Gebäudes (200) hindurch nach einem der Ansprüche 1 bis 9, **dadurch gekennzeichnet, dass** die dritten Merkmale (C3) der Umgebung der Verglasung (202) mindestens eine Innentemperatur (Ti) innerhalb des Gebäudes (200) und/oder mindestens eine Außentemperatur (Te) außerhalb des Gebäudes (200) umfassen.

11. Verfahren zur Bestimmung mindestens eines Werts für Energie- und/oder Lichtaustausch (E, Ed, L, Ld) durch mindestens eine Verglasung (202) eines Gebäudes (200) hindurch nach einem der Ansprüche 1 bis 10, **dadurch gekennzeichnet, dass** die dritten Merkmale (C3) der Umgebung der Verglasung (202) mindestens eine Information zur Sonneneinstrahlung umfassen.

12. Verfahren zur Steuerung mindestens einer Heimautomationsvorrichtung (13), die einen thermischen und/oder Lichtkomfort in einem Gebäude (200) gewährleistet, wobei das Verfahren mindestens den folgenden Schritt umfasst:
- Steuern (1006) der mindestens einen Heimautomationsvorrichtung (13) in Abhängigkeit von einem Wert für Energie- und/oder Lichtaustausch (Ed, Ld), der zu mindestens einem bestimmten Datum (D) bestimmt wird, nach einem Verfahren zur Bestimmung nach einem der Ansprüche 1 bis 10 und nach Anspruch 2.

13. Verfahren zur Steuerung mindestens einer Heimautomationsvorrichtung (13), die einen thermischen und/oder Lichtkomfort in einem Gebäude (200) gewährleistet, nach Anspruch 12, **dadurch gekennzeichnet, dass** das Verfahren auch einen Schritt des Detektierens des Vorhandenseins (1005) mindestens eines Verdunkelungselements in dem Gebäude (200) zu dem bestimmten Datum (D) umfasst und dass der Schritt des Steuerns (1006) der mindestens einen Heimautomationsvorrichtung (13) von dem Ergebnis des Schritts des Detektierens (1005) abhängig ist.

14. Vorrichtung (301) zur Bestimmung mindestens eines Werts für Energie- und/oder Lichtaustausch (E, Ed, L, Ld) durch mindestens eine Verglasung (202) eines Gebäudes (200) hindurch, wobei die Vorrichtung (301) zur Bestimmung Hardwareelemente (109 - 124) und/oder Softwareelemente umfasst, die dazu ausgestaltet sind, ein Verfahren zur Bestimmung mindestens eines Werts für Energie- und/oder Lichtaustausch (E, Ed, L, Ld) nach einem der Ansprüche 1 bis 11 durchzuführen.

15. System (302) zur Steuerung mindestens einer Heimautomationsvorrichtung (13), die einen thermischen und/oder Lichtkomfort in einem Gebäude (200) gewährleistet, wobei das System (302) zur Steuerung Hardwareelemente (109 - 124) und/oder Softwareelemente umfasst, die dazu ausgestaltet sind, das Verfahren zur Steuerung mindestens einer Heimautomationsvorrichtung (13) nach Anspruch 12 oder nach Anspruch 13 durchzuführen.

## Claims

1. Method for determining at least one value quantifying exchange of energy and/or light (E, Ed, L, Ld) through at least one glazing (202) of a building (200), the building (200) comprising a plurality of apertures (201), each aperture (201) or at least some thereof being configured to be closed by one respective glazing (202), the building (200) being equipped with a home-automation apparatus (100), the home-automation apparatus (100) comprising at least one mobile terminal (11) and at least one home-automation device (13), the home-automation device (13) comprising, for each glazing (202) or for some thereof, at least one occulting device (99) and a motorized driving device (97), the motorized driving device (97) moving a screen of the occulting device (99) between at least a first position and at least a second position, the determining method being implemented at least partly by the mobile terminal (11), the method comprising at least the following steps:
- obtaining (1001) first characteristics (C1) of the glazing (202) and/or second characteristics (C2) of at least one occulting device (99) associated with the glazing (202),
- obtaining (1002) third characteristics (C3) of the environment of the glazing (202), via the mobile terminal (11),
- automatically determining (1003) at least one value quantifying exchange of energy and/or light (E, L) through the glazing (202) based on the third characteristics (C3) of the environment of the glazing (202) obtained beforehand in the second obtaining step (1002), and on the first characteristics (C1) of the glazing (202) and/or second characteristics (C2) of the occulting device (99) obtained beforehand in the first obtaining step (1001),
the obtaining steps (1001, 1002) and determining step (1003) being iterated on a plurality of apertures (201) of the building (200) each equipped with one glazing (202).

2. Method for determining at least one value quantifying exchange of energy and/or light (E, Ed, L, Ld) through at least one glazing (202) of a building (200) according to Claim 1, **characterized in that** the determining step (1003) is implemented for at least one determined date (D), **in that** the second characteristics (C2) of the occulting device (99) comprise second characteristics (C2d) of the occulting device (99) on the determined date (D) and/or the third characteristics (C3) of the environment of the glazing (202) comprise third characteristics (C3d) of the environment of the glazing (202) on the determined date (D) and **in that** the method further comprises at least one step of automatically determining (1004) at least one value quantifying exchange of energy and/or light (Ed, Ld) through the glazing (202) on the determined date (D) based on:
- the value quantifying exchange of energy and/or light (E, L) determined beforehand in the determining step (1003),
- the second characteristics (C2d) of the occulting device (99) on the determined date (D) and the third characteristics (C3d) of the environment of the glazing (202) on the determined date (D), and
- the determined date (D).

3. Method for determining at least one value quantifying exchange of energy and/or light (E, Ed, L, Ld) through at least one glazing (202) of a building (200) according to Claim 2, **characterized in that** the third characteristics (C3d) of the environment of the glazing (202) on the determined date (D) comprise at least one temperature (Ti) inside the building (200) on the determined date (D) and/or at least one temperature (Te) outside the building (200) on the determined date (D) and/or at least one piece of information on solar radiation on the determined date (D).

4. Method for determining at least one value quantifying exchange of energy and/or light (E, Ed, L, Ld) through at least one glazing (202) of a building (200) according to any of Claims 1 to 3, **characterized in that** the third characteristics (C3) of the environment of the glazing (202) comprise at least a shading mask (M).

5. Method for determining at least one value quantifying exchange of energy and/or light (E, Ed, L, Ld) through at least one glazing (202) of a building (200) according to any of Claims 1 to 4, **characterized in that** the third characteristics (C3) of the environment of the glazing (202) comprise at least a geographic location of the glazing (202).

6. Method for determining at least one value quantifying exchange of energy and/or light (E, Ed, L, Ld) through at least one glazing (202) of a building (200) according to any of Claims 1 to 5, **characterized in that** the third characteristics (C3) of the environment of the glazing (202) comprise at least an orientation of the glazing (202) with respect to a cardinal reference frame (98).

7. Method for determining at least one value quantifying exchange of energy and/or light (E, Ed, L, Ld) through at least one glazing (202) of a building (200) according to any of Claims 1 to 6, **characterized in that** the first characteristics (C1) of the glazing (202) comprise at least a first coefficient (K1) of thermal transmission related to a temperature gradient between two faces of the glazing (202) and/or at least a second coefficient (K2) of solar transmission through the glazing (202).

8. Method for determining at least one value quantifying exchange of energy and/or light (E, Ed, L, Ld) through at least one glazing (202) of a building (200) according to any of Claims 1 to 7, **characterized in that** the second characteristics (C2) of the occulting device (99) comprise at least a third coefficient (K3) of additive thermal resistance of the occulting device (99) and/or at least a fourth coefficient (K4) of thermal transmission of the occulting device (99) and/or at least a fifth coefficient (K5) of energy reflection of the occulting device (99) and/or an indication of the internal or external mounting position of the occulting device (99) with respect to the building (200).

9. Method for determining at least one value quantifying exchange of energy and/or light (E, Ed, L, Ld) through at least one glazing (202) of a building (200) according to any of Claims 1 to 8, **characterized in that** the first characteristics (C1) of the glazing (202) comprise at least one dimension (h, 1, S) of the glazing (202).

10. Method for determining at least one value quantifying exchange of energy and/or light (E, Ed, L, Ld) through at least one glazing (202) of a building (200) according to any of Claims 1 to 9, **characterized in that** the third characteristics (C3) of the environment of the glazing (202) comprise at least one temperature (Ti) inside the building (200) and/or at least one temperature (Te) outside the building (200).

11. Method for determining at least one value quantifying exchange of energy and/or light (E, Ed, L, Ld) through at least one glazing (202) of a building (200) according to any of Claims 1 to 10, **characterized in that** the third characteristics (C3) of the environment of the glazing (202) comprise at least one piece of information on solar radiation.

12. Method for controlling at least one home-automation device (13) ensuring a comfortable temperature and/or amount of light in a building (200), the method comprising at least the following step:
- controlling (1006) said at least one home-automation device (13) depending on at least one determined value quantifying exchange of energy and/or light (Ed, Ld) on at least one determined date (D), according to a determining method according to any of Claims 1 to 10 and according to Claim 2.

13. Method for controlling at least one home-automation device (13) ensuring a comfortable temperature and/or amount of light in a building (200) according to Claim 12, **characterized in that** the method also comprises a step (1005) of detecting the presence of at least one occupant in the building (200) on the determined date (D) and **in that** the step (1006) of controlling said at least one home-automation device (13) is dependent on the result of the detecting step (1005).

14. Device (301) for determining at least one value quantifying exchange of energy and/or light (E, Ed, L, Ld) through at least one glazing (202) of a building (200), the determining device (301) comprising hardware elements (109 - 124) and/or software elements configured to implement a method for determining at least one value quantifying an exchange of energy and/or light (E, Ed, L, Ld) according to any of Claims 1 to 11.

15. Control system (302) for controlling at least one home-automation device (13) ensuring a comfortable temperature and/or amount of light in a building (200), the control system (302) comprising hardware elements (109 - 124) and/or software elements configured to implement a method for controlling at least one home-automation device (13) according to Claim 12 or according to Claim 13.
